(19) Europäisches Patentamt
European Patent Office
Office européen des brevets

(11) Veröffentlichungsnummer: **0 541 057 A1**

# (12) EUROPÄISCHE PATENTANMELDUNG

(21) Anmeldenummer: **92118878.5**

(22) Anmeldetag: **04.11.92**

(51) Int. Cl.5: **C09B 62/517**, C09B 62/10

(30) Priorität: **08.11.91 DE 4136782**

(43) Veröffentlichungstag der Anmeldung:
**12.05.93 Patentblatt 93/19**

(84) Benannte Vertragsstaaten:
**BE CH DE ES FR GB IT LI NL PT**

(71) Anmelder: **HOECHST AKTIENGESELLSCHAFT**
**Postfach 80 03 20**
**W-6230 Frankfurt am Main 80(DE)**

(72) Erfinder: **Beck, Thomas, Dr.**
**Altkönigstrasse 1**
**W-6232 Bad Soden/Ts.(DE)**
Erfinder: **Russ, Werner Hubert, Dr.**
**Wingertstrasse 8a**
**W-6093 Flörsheim am Main(DE)**
Erfinder: **Mühlig, Wilhelm**
**Albert-Blank-Strasse 5**
**W-6230 Frankfurt am Main 80(DE)**

## (54) Wasserlösliche Phthalocyaninfarbstoffe, Verfahren zu ihrer Herstellung und ihre Verwendung.

(57) Es werden wasserlösliche Phthalocyaninfarbstoffe, insbesondere Kupfer- und Nickelphthalocyaninfarbstoffe, beschrieben, die der nachstehenden allgemeinen Formel (1) entsprechen und die nach den in der Technik üblichen Verfahrensweisen für faserreaktive Farbstoffe als wertvolle Farbstoffe zum Färben und Bedrucken von hydroxy- und/oder carbonamidgruppenhaltigem Fasermaterial, wie Baumwolle, Wolle und synthetisches Polyamid, eingesetzt werden können.

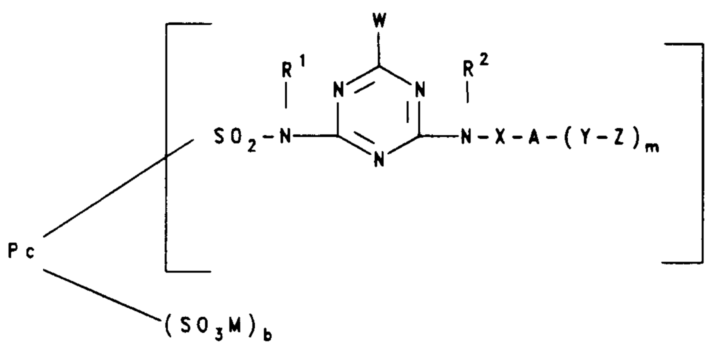

(1)

in welcher Pc den Phthalocyaninrest bedeutet, $R^1$ und $R^2$ beide Wasserstoff oder Alkyl sind, A ein aromatischer carbocyclischer oder heterocyclischer Rest ist, der durch in Farbstoffen übliche Substituenten substituiert sein kann, oder ein Alkylenrest ist, der durch 1 oder 2 Heterogruppen unterbrochen sein kann, X eine direkte Bindung oder ein zweiwertiges organisches Bindeglied, wie ein Alkylenrest oder eine Alkylenaminogruppe, ist, Y eine direkte Bindung oder eine Gruppe der Formel -CO-NH-Alkylen- oder eine Methylamino- oder β-Cyanoethylaminogruppe ist, Z den faserreaktiven Rest der Vinylsulfonreihe bedeutet oder β-Hydroxyethylsulfonyl ist, m die Zahl 1 oder 2 bedeutet, W Halogen, Sulfo, Phenylsulfonyl, Alkylsulfonyl von 1 bis 4 C-Atomen, Alkoxy von 1 bis 4 C-Atomen oder gegebenenfalls substituiertes Aryloxy ist oder W eine Aminogruppe der allgemeinen Formel (2) oder (3)

EP 0 541 057 A1

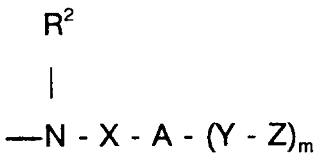 (2) 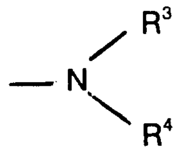 (3)

bedeutet, in welchen $R^2$, X, A, Y, Z und m eine der obengenannten Bedeutungen besitzt und $R^3$ Wasserstoff oder gegebenenfalls substituiertes Alkyl oder Cycloalkyl ist und $R^4$ Wasserstoff, gegebenenfalls substituiertes Alkyl, gegebenenfalls substituiertes Phenyl oder Cyano ist oder $R^3$ und $R^4$ zusammen mit dem N-Atom einen heterocyclischen Ring bilden, a eine Zahl von 1 bis 4 und b eine Zahl von Null bis 3 und die Summe von (a + b) eine Zahl von 1 bis 4 ist und M für ein Wasserstoffatom oder ein Alkalimetall oder ein anderes salzbildendes Metall steht.

Die Erfindung liegt auf dem technischen Gebiet der faserreaktiven Farbstoffe.

Faserreaktive Phthalocyaninfarbstoffe, die, über einen N-Aryl- oder N-Alkylsulfonamid-Rest gebunden, eine faserreaktive Gruppe aus der Halogentriazinreihe und zusätzlich einen faserreaktiven Rest aus der Vinylsulfonreihe enthalten, sind beispielsweise aus der Europäischen Patentanmeldungs-Veröffentlichung Nr. 0 073 267 A und den US-Patentschriften Nrs. 4 505 714, 4 693 725 und 4 812 558 bekannt. Trotz der sehr guten färberischen Eigenschaften dieser bekannten Farbstoffe war es wünschenswert, Farbstoffe zu entwickeln, die einen erhöhten Fixiergrad besitzen und Färbungen mit besserer coloristischer Farbstärke liefern. Denn die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die nicht nur gute Echtheiten der mit ihnen erhältlichen Färbungen, sondern auch einen hohen Fixiergrad auf dem zu färbenden Material besitzen.

Mit der vorliegenden Erfindung wurden nunmehr neue, wasserlösliche Phthalocyaninfarbstoffe gefunden, mit denen qualitativ hochwertige Färbungen in einem brillanten blaustichigen Türkis erhalten werden und die der allgemeinen Formel (1)

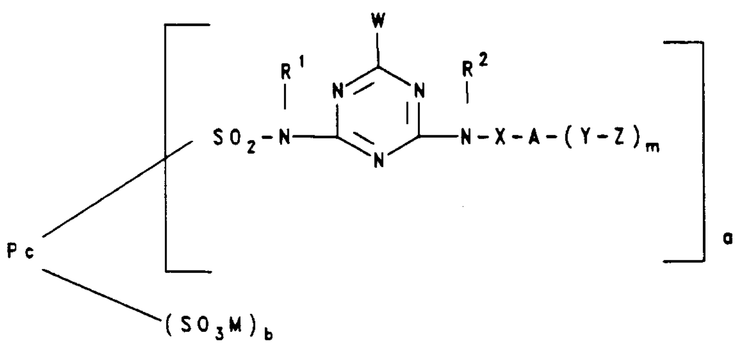

(1)

entsprechen. In Formel (1) bedeuten:

- Pc ist der Rest des metallfreien oder eines metallhaltigen Phthalocyanins, wie beispielsweise des Kupfer-, Kobalt- oder Nickelphthalocyanins, wobei der Phthalocyaninrest noch in den 3- und/oder 4-Stellungen der carbocyclischen aromatischen Ringe substituiert sein kann, wie beispielsweise durch Halogenatome, wie Chloratome, oder Arylreste, wie Phenylreste, und in welchem die Sulfonamid- und Sulfogruppen in den 3- und/oder 4-Stellungen der carbocyclischen aromatischen Ringe des Phthalocyanins gebunden sind;
- $R^1$ ist Wasserstoff oder Alkyl von 1 bis 4 C-Atomen, wie Methyl und Ethyl, bevorzugt Wasserstoff;
- $R^2$ ist Wasserstoff oder Alkyl von 1 bis 4 C-Atomen, wie Methyl und Ethyl, bevorzugt Wasserstoff;
- X ist eine direkte Bindung oder ein zweiwertiges organisches Bindeglied, wie beispielsweise ein Alkylenrest von 1 bis 6 C-Atomen, insbesondere ein Ethylen- oder Propylenrest, oder eine Alkylenaminogruppe der Formel -alkylen-N(R)-, in welcher alkylen einen Alkylenrest von 1 bis 6 C-Atomen, bevorzugt von 2 bis 6 C-Atomen, bedeutet und R für Wasserstoff oder Alkyl von 1 bis 4 C-Atomen, wie Methyl und Ethyl, steht, oder beispielsweise eine Gruppe der Formel (4a) bis (4j)

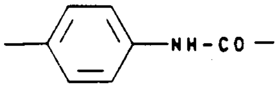

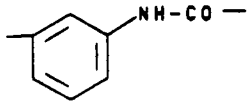

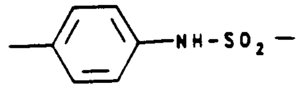

(4a) (4c)

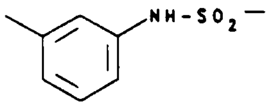

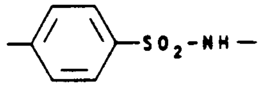

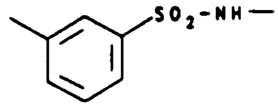

(4d) (4e) (4f)

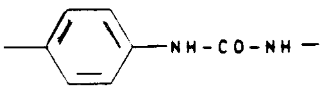

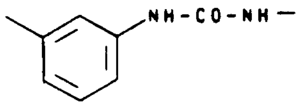

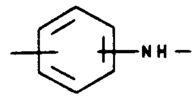

(4g) (4h) (4i)

hiervon bevorzugt die meta-Phenylen-amino-Gruppe oder eine Gruppe der Formel $-(CH_2)_k-$ oder der allgemeinen Formel

$$\begin{array}{c} -(CH_2)_n-N- \;, \\ | \\ R^* \end{array}$$

in welchen

k eine ganze Zahl von 1 bis 5, bevorzugt von 1 bis 4, ist

n eine ganze Zahl von 2 bis 6, bevorzugt von 2 bis 4, ist und

R* Wasserstoff oder Alkyl von 1 bis 5 C-Atomen, wie Ethyl und insbesondere Methyl, bedeutet;

A ist ein aromatischer carbocyclischer oder aromatischer heterocyclischer Rest, bevorzugt ein gegebenenfalls subtituierter Phenylen- oder Naphthylenrest, insbesondere ein Phenylen- oder Naphthylenrest, die beide durch 1 bis 3 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy, Nitro und Sulfo substituiert sein können, oder ist ein Alkylenrest von 1 bis 8 C-Atomen, bevorzugt 2 bis 6 C-Atomen, oder ist ein Alkylenrest von 2 bis 8 C-Atomen, der durch 1 oder 2 Heterogruppen, wie -O- oder -NH-, unterbrochen ist;

Y ist eine direkte Bindung oder eine Gruppe der Formel -CO-NH-alkylen- mit alkylen der obigen Bedeutung, oder ist Alkylen von 1 bis 6 C-Atomen bevorzugt von 2 bis 4 C-Atomen, wie Methylen oder insbesondere 1,2-Ethylen oder 1,3-Propylen, oder ist eine Gruppe der Formel

$$\begin{array}{c} -N- \\ | \\ CH_3 \end{array} \quad \text{oder} \quad \begin{array}{c} -N- \\ | \\ CH_2-CH_2-CN \end{array} \;;$$

Z ist Vinylsulfonyl oder ist Ethylsulfonyl, das in β – Stellung einen alkalisch eliminierbaren Substituenten enthält, wie beispielsweise β – Chlorethylsulfonyl, β – Acetoxyethylsulfonyl, β – Thiosulfatoethylsulfonyl oder β – Phosphatoethylsulfonyl, bevorzugt β – Sulfatoethyl – sulfonyl, oder ist β – Hydroxyethylsulfonyl;

m ist die Zahl 1 oder 2, bevorzugt 1;

W ist Halogen, wie Chlor und Fluor, Sulfo, Phenylsulfonyl, Alkylsulfonyl von 1 bis 4 C – Atomen, wie Methylsulfonyl und Ethylsulfonyl, Alkoxy von 1 bis 4 C – Atomen, wie Methoxy und Ethoxy, oder gegebenenfalls substituiertes Aryloxy, oder

W ist eine Aminogruppe der allgemeinen Formel (2)

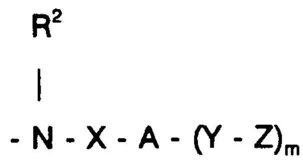

(2)

in welcher $R^2$, X, A, Y, Z und m eine der obengenannten Bedeutungen haben, oder ist eine Aminogruppe der allgemeinen Formel (3)

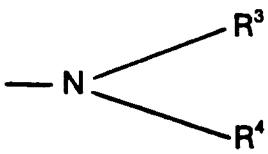

(3)

in welcher

$R^3$ Wasserstoff, Alkyl von 1 bis 4 C – Atomen, wie Methyl und Ethyl, Alkyl von 1 bis 4 C – Atomen, das durch Hydroxy, Sulfato, Sulfo, Carboxy oder Phosphato substituiert ist, oder Cycloalkyl von 5 bis 8 C – Atomen, wie Cyclohexyl, Cyclopentyl und Dimethylcyclohexyl ist, und

$R^4$ Wasserstoff, Alkyl von 1 bis 4 C – Atomen, wie Ethyl und Methyl, Alkyl von 1 bis 4 C – Atomen, das durch Hydroxy, Sulfo, Carboxy, Sulfato oder Phosphato substituiert ist, Phenyl oder Phenyl ist, das durch 1, 2 oder 3 Substituenten aus der Gruppe Alkyl von 1 bis 4 C – Atomen, wie Methyl und Ethyl, Alkoxy von 1 bis 4 C – Atomen, wie Ethoxy und Methoxy, Halogen, wie Chlor und Brom, Carboxy, Nitro und Sulfo substituiert ist, oder Cyano ist, oder

$R^3$ und $R^4$ bilden gemeinsam mit dem Stickstoffatom den Rest eines 4 – bis 8 – gliedrigen hetero – cyclischen Rings mit einem Alkylenrest von 3 bis 8 C – Atomen, bevorzugt 4 bis 6 C – Atomen, oder einem weiteren Heteroatom, wie einem Stickstoffatom oder einem Sauer – stoffatom, und zwei Alkylenresten von 1 bis 4 C – Atomen, wie beispielsweise den N – Piperidino – , N – Piperazino – oder N – Morpholino – Rest;

a ist eine ganze Zahl von 1 bis 4, bevorzugt 2, 3 oder 4;

b ist eine ganze Zahl von Null bis 3;

die Summe von (a + b) ist 1 bis 4;

M ist ein Wasserstoffatom oder ein Alkalimetall, wie Natrium, Kalium oder Lithium, oder ein anderes salzbildendes Metall.

Die Formelglieder können zueinander gleiche oder voneinander verschiedene Bedeutungen besitzen.

Die erfindungsgemäßen Phthalocyaninfarbstoffe werden in der Regel in Form von Gemischen der Einzelverbindungen der allgemeinen Formel (1) erhalten, wobei sich diese Einzelverbindungen voneinander durch den Substitutionsgrad der Carboxy – , Sulfo – , Carbonamid – und Sulfonamidgruppen an den Phtha – locyaninrest unterscheiden, d.h. durch die Größe der Indices a und b. Die Formeln der erfindungsgemäßen Phthalocyaninfarbstoffe haben deshalb Indices, die in der Regel gebrochene Zahlen sind.

Eine Sulfogruppe ist eine Gruppe der allgemeinen Formel $-SO_3M$ mit M der obengenannten Bedeutung; in gleicher Weise ist eine Carboxygruppe eine Gruppe der allgemeinen Formel $-COOM$, eine Sulfatogruppe eine Gruppe der allgemeinen Formel $-OSO_3M$, eine Thiosulfatogruppe eine Gruppe der allgemeinen Formel $-S-SO_3M$ und eine Phosphatogruppe eine Gruppe der allgemeinen Formel $-OPO_3M_2$, jeweils mit M der obengenannten Bedeutung.

Die erfindungsgemäßen Phthalocyaninfarbstoffe der Formel (1) liegen in Form ihrer Salze, wie der Alkalimetallsalze, vor und finden als solche ihre Verwendung zum Färben von Fasermaterialien.

Arylreste sind bevorzugt gegebenenfalls substituierte Naphthylreste, wie sulfosubstituierte Naphthylreste, und insbesondere substituierte Phenylreste, vorzugsweise solche mit 1 oder 2 Substituenten aus der Gruppe Methyl, Ethyl, Methoxy, Ethoxy, Chlor, Carboxy und Sulfo.

Bevorzugte Verbindungen der allgemeinen Formel (1) sind solche, in welcher Pc den Nickelphthalocyaninrest und insbesondere den Kupferphthalocyaninrest bedeutet, weiterhin solche Verbindungen der allgemeinen Formel (1), in welcher $R^1$ oder $R^2$ oder beide Wasserstoff bedeuten, des weiteren solche, in welchen A der meta- oder para-Phenylenrest, der durch Sulfo, Methyl und/oder Methoxy substituiert sein kann, oder Ethylen oder n-Propylen ist, und weiterhin solche, in denen W gleich Chlor, Fluor oder Cyano ist.

Reste der allgemeinen Formel (2), die in den Verbindungen der allgemeinen Formel (1) enthalten sind bzw. sein können, sind beispielsweise 2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-Chlor-3-(β-sulfatoethylsulfonyl)-phenyl-amino, 2-Chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- oder 3- oder 4-(β-Thiosulfatoethylsulfonyl)-phenyl-amino, 2-Methoxy-5-(β-thiosulfatoethylsulfonyl)-phenyl-amino, 2-Sulfo-4-(β-phosphatoethylsulfonyl)-phenyl-amino, 2-Sulfo-4-vinylsulfonyl-phenyl-amino, 2-Hydroxy-4- oder -5-(β-sulfatoethylsulfonyl)-phenyl-amino, 2-Chlor-4- oder -5-(β-chlorethylsulfonyl)-phenyl-amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)-naphth-2-yl-amino, 6- oder 7- oder 8-(β-Sulfatoethylsulfonyl)-naphth-2-yl-amino,6-(β-Sulfatoethylsulfonyl)-1-sulfo-naphth-2-yl-amino, 5-(β-Sulfatoethylsulfonyl)-1-sulfo-naphth-2-yl-amino, 8-(β-Sulfatoethylsulfonyl)-6-sulfo-naphth-2-yl-amino, β-[4-(β'-Sulfatoethylsulfonyl)-phen]-ethylamino, β-[2-Sulfo-4-(β'-sulfatoethylsulfonyl)-phen]-ethylamino, β-(β'-Chlorethylsulfonyl)-ethylamino, β-(β'-Sulfatoethylsulfonyl)-ethylamino, β-(Vinylsulfonyl)-ethylamino, γ-(β'-Chlorethylsulfonyl)-propylamino, γ-(β'-Sulfatoethylsulfonyl)-propylamino, γ-(β'-Bromethylsulfonyl)-propylamino, γ-(Vinylsulfonyl)-propylamino, 1-Methyl-1-(β-sulfatoethylsulfonyl)-1-ethylamino, δ-(β'-Sulfatoethylsulfonyl)-butylamino, 2-Methyl-2-(β-chlorethylsulfonyl)-1-propylamino, ω-(β'-Chlorethylsulfonyl)-pentylamino, β-(β'-Chlorethylsulfonyl)-n-hexylamino, N-Methyl-N-[β-(β'-chlorethylsulfonyl)-ethyl]-amino, N-Ethyl-N-[β-(β'-chlorethylsulfonyl)-ethyl]-amino, N-n-Propyl-N-[β-(β'-chlorethylsulfonyl)-ethyl]-amino, N-n-Butyl-N-[β-(β'-chlorethylsulfonyl)-ethyl]-amino β-[β'-(β''-Chlorethylsulfonyl)-ethylamino]-ethylamino, β-[β'-(β''-Sulfatoethylsufonyl)-ethylamino]-ethylamino, β-[β'-(β''-Chlorethylsulfonyl)-ethoxy]-ethylamino, β-[β'-(β''-Sulfatoethylsulfonyl)-ethoxy]-ethylamino, 3,4-Di-(β-sulfatoethylsulfonyl)-phenylamino, 2,5-Di-(β-sulfatoethylsulfonyl)-phenylamino, 4-[γ-(β'-Sulfatoethylsulfonyl)-propoxy]-phenylamino, 2,5-Bis-[(β-sulfatoethylsulfonyl)-methyl]-phenylamino, 3- oder 4-[γ-(β'-Sulfatoethylsulfonyl)-propyl-amidocarbonyl]-phenylamino und 3,5-Bis-[γ-(β'-sulfatoethylsulfonyl)-propyl-amidocarbonyl]-phenylamino.

Reste der allgemeinen Formel $-NR^3R^4$, die in den Verbindungen der allgemeinen Formel (1) enthalten sein können, sind beispielsweise Methylamino, Ethylamino, n-Butylamino, Benzylamino, Phenylamino, β-Hydroxy-ethylamino, Dimethylamino, Diethylamino, Di-(isopropyl)-amino, N-Methyl-benzylamino, N-Methyl-phenylamino, N-Piperidino, N-Morpholino, Di-(β-Hydroxyethyl)-amino, β-Sulfo-ethylamino, β-Carboxy-ethylamino, β-(4-Carboxy-phenyl)-ethylamino, 3-Sulfo-phenylamino, 4-Sulfophenylamino, die primäre Aminogruppe und der Cyanamidorest.

Die vorliegende Erfindung betrifft weiterhin Verfahren zur Herstellung der Phthalocyaninfarbstoffe der allgemeinen Formel (1), die dadurch gekennzeichnet sind, daß man eine Verbindung der allgemeinen Formel (5)

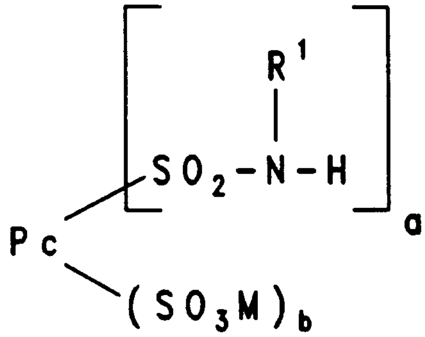

(5)

in welcher die einzelnen Formelreste die für Formel (1) angegebenen Bedeutungen haben, mit einer Halogen-triazin-Verbindung der allgemeinen Formel (6)

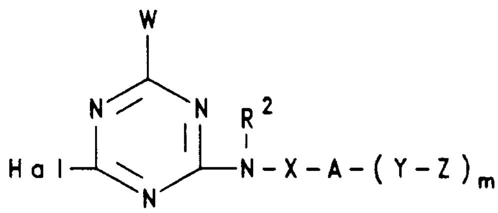

(6)

in welcher Ha für Halogen, wie Chlor und Fluor, steht und W, $R^2$, X, A, Y, Z und m eine der obengenannten Bedeutungen haben, umsetzt,
oder daß man eine Verbindung der allgemeinen Formel (7)

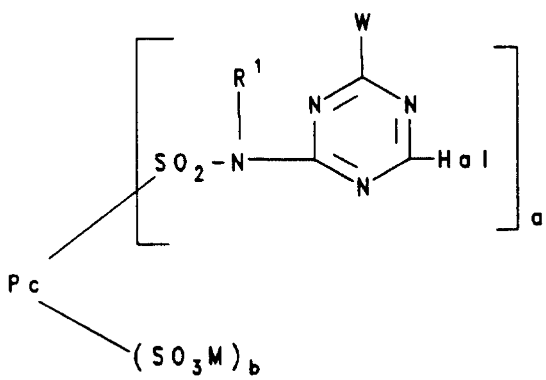

(7)

in welcher die Formelreste die für Formel (1) angegebenen Bedeutungen haben, mit einer Aminoverbindung der allgemeinen Formel (8)

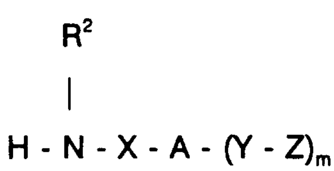

(8)

in welcher $R^2$, X, A, Y, Z und m eine der obengenannten Bedeutungen haben, umsetzt, wobei man im Falle, daß Z für die $\beta$-Hydroxyethylsulfonyl-Gruppe steht und W kein Halogenatom bedeutet, die erhaltene $\beta$-hydroxyethylsulfonylgruppenhaltige Phthalocyaninverbindung in einen Phthalocyaninfarbstoff der Formel (1) mit einem Rest Z einer anderen Bedeutung in an und für sich bekannter Verfahrensweise überführt,
oder daß man zur Herstellung eines Phthalocyaninfarbstoffes der Formel (1), in welcher W eine Aminogruppe der Formel (2) oder ein Halogenatom bedeutet, eine Verbindung der allgemeinen Formel (9)

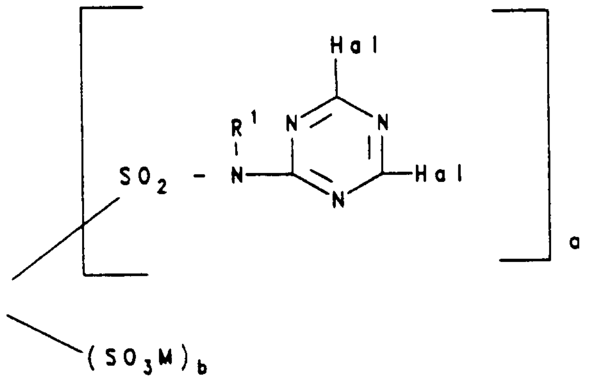

(9)

in welcher die einzelnen Formelreste die für Formel (1) angegebenen Bedeutungen haben und Hal für Chlor oder Fluor steht, mit einem Amin der allgemeinen Formel (8) in ein- oder zweifach äquivalenter Menge umsetzt.

Welche der Verfahrensweisen zur Herstellung der erfindungsgemäßen Phthalocyaninfarbstoffe der Formel (1) bevorzugt eingesetzt oder zweckmäßig durchgeführt wird, richtet sich vor allem nach der Löslichkeit der beteiligten aminogruppenhaltigen Ausgangsverbindungen und deren Basizität. Bevorzugt sind die Verfahrensweisen der Umsetzungen der Verbindung (7) oder (9) mit dem Amin (8).

Die erfindungsgemäßen Umsetzungen können in wäßrigem oder wäßrig-organischem Medium durchgeführt werden. Ist das Medium ein wäßrig-organisches Medium, so ist der organische Lösemittelanteil ein mit Wasser mischbares, gegenüber den Reaktanten und Reaktionsbedingungen inertes Lösemittel, wie beispielsweise Dimethylsulfoxyd, Aceton und ein N-Alkyl-acylamid, wie Dimethylformamid. Die Umsetzung der aminogruppenhaltigen Phthalocyaninverbindungen oder der Amine mit den Halogentriazinverbindungen erfolgt in an und für sich üblicher Verfahrensweise unter den üblichen Verfahrensbedingungen, die für analoge Umsetzungsreaktionen zwischen Aminen oder Cyanamid und einem Halogentriazin bekannt sind (s. bspw. die Europäische Patentanmeldungs-Veröffentlichungen Nr. 0 218 131A und die US-Patentschriften Nrs. 3 758 470 und 4 350 632). In der Regel erfolgt die Umsetzung zwischen einer Verbindung der allgemeinen Formel (5) und einem Halogentriazin der allgemeinen Formel (6) bei einer Temperatur zwischen 40 und 90 °C, bevorzugt zwischen 60 und 80 °C, und bei einem pH-Wert zwischen 2 und 7, bevorzugt zwischen 3 und 5. Die Umsetzung zwischen einer Verbindung der allgemeinen Formel (7) und einer Aminoverbindung der allgemeinen Formel (8) wird in der Regel bei einer Temperatur zwischen 25 und 50 °C, bevorzugt zwischen 30 und 40 °C, und bei einem pH-Wert zwischen 3 und 11, bevorzugt zwischen 3, 5 und 7, durchgeführt. Die Verbindungen der allgemeinen Formel (9) werden mit der Aminoverbindung der allgemeinen Formel (8) in der Regel bei einer Temperatur zwischen 25 und 50 °C, bevorzugt zwischen 30 und 40 °C, und bei einem pH-Wert zwischen 3 und 11, bevorzugt zwischen 5 und 9, umgesetzt.

Geht man bei dem erfindungsgemäßen Verfahren zur Herstellung der Phthalocyaninverbindungen der allgemeinen Formel (1) von einem Ausgangsamin der Formel (8) aus, in welchem Z die $\beta$-Hydroxyethylsulfonyl-Gruppe bedeutet, so kann man die erhaltene Phthalocyaninverbindung in eine andere erfindungsgemäße Phthalocyaninverbindung, die in $\beta$-Stellung des Ethylsulfonylrestes eine Estergruppe, wie beispielsweise die Sulfatogruppe enthält, überführen. Diese Veresterungsreaktion erfolgt analog bekannter Verfahrensweisen mit den üblichen Veresterungs- und Acylierungsmitteln für solche Säuren, wie beispielsweise Acetanhydrid, Polyphosphorsäure, Phosphorpentachlorid und insbesondere 96-100 %ige Schwefelsäure oder Schwefeltrioxyd enthaltende Schwefelsäure, wie Oleum mit einem Schwefeltrioxydgehalt von bis zu 35 %, oder Chlorsulfonsäure zur Einführung der Sulfatogruppe. Die Umsetzung mit Schwefelsäure oder Schwefeltrioxyd enthaltender Schwefelsäure erfolgt bei einer Temperatur zwischen 0 °C und 25 °C. Die Umsetzung mit Chlorsulfonsäure kann auch in einem polaren organischen Lösemittel, wie beispielsweise N-Methylpyrrolidon, bei 10 bis 80 °C erfolgen.

Die Ausgangsverbindungen der allgemeinen Formel (5) werden in an und für sich bekannter Weise der Umsetzung von Phthalocyaninsulfonsäurechloriden mit Aminoverbindungen hergestellt, so durch Umsetzung eines Phthalocyaninsulfonsäurechlorids der allgemeinen Formel (10)

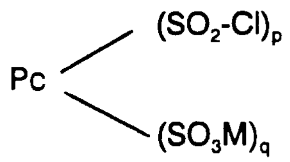

(10)

in welcher

Pc und M die obengenannten Bedeutungen haben,

p eine ganze Zahl von 1 bis 4 bedeutet und

q eine ganze Zahl von Null bis 3 ist,

wobei die Summe von (p + q) eine ganze Zahl von 1 bis 4 ist,

oder einer Mischung dieser Verbindungen der allgemeinen Formel (11) in einem wäßrigen oder wäßrig-organischen Medium mit einem Amin der allgemeinen Formel $H_2NR^1$ , in welcher $R^1$ die obengenannte Bedeutung hat.

Bei der Umsetzung der Phthalocyaninsulfonsäurechloride der allgemeinen Formel (10) mit einer Aminoverbindung der allgemeinen Formel $H_2NR^1$, bevorzugt Ammoniak, kann während der Reaktion gleichzeitig eine partielle Hydrolyse der Sulfonsäurechloridgruppen erfolgen.

Die Ausgangsverbindungen der allgemeinen Formel (7) und (9) erhält man analog bekannten Verfahrensweisen der Umsetzung von Aminoverbindungen bzw. Sulfonamidverbindungen mit Halogentriazin-Verbindungen oder mit einem Cyanurhalogenid (1,3,5-Halogeno-s-triazin), so durch Umsetzung einer Verbindung der allgemeinen Formel (5) mit einem Cyanurhalogenid, wie Cyanurchlorid oder Cyanurfluorid, oder einem Dihalogeno-s-triazin der allgemeinen Formel (11)

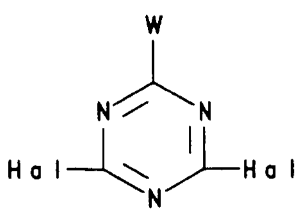

(11)

in welcher Hal und W die obengenannten Bedeutungen haben, wobei die Umsetzungen sowohl in wäßrigem als auch in dem obengenannten wäßrig-organischen Medium bei einer Temperatur zwischen 0 und 25°C und einem pH-Wert zwischen 7 und 14, bevorzugt zwischen 10 und 12, durchgeführt werden können.

Ausgangsverbindungen der allgemeinen Formel (7), in welchen W eine Aminogruppe der allgemeinen Formel (3) ist, können durch Umsetzung einer Verbindung der allgemeinen Formel (9) mit einem Amin der allgemeinen Formel $HNR^3R^4$ bei einer Temperatur zwischen 25 und 40°C und einem pH-Wert zwischen 3 und 11,5, vorzugsweise zwischen 5 und 9, in wäßrigem Medium oder in dem obengenannten wäßrig-organischen Medium erhalten werden.

Ausgangsverbindungen der allgemeinen Formel (7), in welchen W für die Cyanamidogruppe steht, erhält man durch Umsetzung einer Verbindung der allgemeinen Formel (9) mit Cyanamid oder einem Alkalimetallsalz davon bei einem pH-Wert zwischen 7 und 10, bevorzugt zwischen 8 und 9, und einer Temperatur zwischen 10 und 50°C, bevorzugt zwischen 30 und 40°C, in wäßrigem Medium.

Ausgangsverbindungen der allgemeinen Formel (6) erhält man durch Umsetzung eines Cyanurhalogenids oder eines Cyanamido-dihalogeno-triazins (bekannt aus US-PS 3 758 470) oder einem an und für sich bekannten (s. bspw. US-PS 4 649 193, US-PS 4 939 243 und Europäische Patentanmeldungs-Veröffentlichung Nr. 0 324 373) Amino-dihalogeno-s-triazin der allgemeinen Formel (11) mit einer Aminoverbindung der allgemeinen Formel (8) bei einer Temperatur zwischen 0 und 10°C und einem pH-Wert zwischen 3 und 6 in wäßrigem oder in dem obengenannten wäßrig-organischen Medium.

Phthalocyaninfarbstoffe der allgemeinen Formel (1) können in üblicher und bekannter Verfahrensweise in Phthalocyaninfarbstoffe der allgemeinen Formel (1) mit einem anderen alkalisch eliminierbaren Substituenten im faserreaktiven Rest Z überführt werden. Solche Verfahrensweisen sind in der Literatur, faserreaktive Farbstoffe mit dem faserreaktiven Rest der Vinylsulfonreihe betreffend, zahlreich beschrieben. So können Phthalocyaninfarbstoffe mit dem $\beta$-Sulfatoethylsulfonyl-Rest durch Behandlung mit einem Alkali, wie in wäßriger Natronlauge bei einer Temperatur von 0 bis 40°C während einiger Minuten, in die Phthalocyaninfarbstoffe mit der Vinylsulfonylgruppe für den Rest Z überführt werden. Erfindungsgemäße Phthalocyaninfarbstoffe mit dem $\beta$-Thiosulfatoethylsulfonyl-Rest lassen sich beispielsweise aus Phthalocyaninfarbstoffe mit der Vinylsulfonylgruppe durch Umsetzung mit Natriumthiosulfat gewinnen.

Die erfindungsgemäßen Kondensationsreaktionen zwischen den Verbindungen der allgemeinen Formel (10) und den Aminen $H_2NR^1$ erfolgen bei einem pH-Wert zwischen 3,5 und 10, vorzugsweise zwischen 6 und 9, und bei einer Temperatur zwischen 0°C und 100°C, vorzugsweise zwischen 20 und 70°C, insbesondere zwischen 40 und 60°C.

Gegebenenfalls substituierte Phthalocyaninsulfonsäurechloride sind seit langem in der Literatur bekannt,beispielsweise aus der US-Patentschrift Nr. 4 505 714 und aus der deutschen Patentschrift Nr. 891 121.

Phthalocyanin-Ausgangsverbindungen der allgemeinen Formel (10) sind beispielsweise die Sulfonsäurechloride und die sulfongruppenhaltigen Sulfonsäurechloride des metallfreien Phthalocyanins und vorzugsweise der Kupfer-, Kobalt- und Nickelphthalocyanine, wie beispielsweise die Mono-, Di-, Tri- und Tetrasulfonsäurechlorid des Kupferphthalocyanins, Kobaltphthalocyanins und Nickelphthalocyanins, so beispielsweise Kupferphthalocyanin-(3)-monosulfonsäurechlorid, Kupferphthalocyanin-(3)-disulfonsäurechlorid, Kupferphthalocyanin-(3)-trisulfonsäurechlorid, Kupferphthalocyanin-(3)-tetrasulfonsäurechlorid, Nickelphthalocyanin-(3)-tetrasulfonsäurechlorid, Kobaltphthalocyanin-(3)-monosulfonsäurechlorid, Kobaltphthalocyanin-(3)-di- und -trisulfonsäurechlorid, Kupferphthalocyanin-(4)-mono- und -disulfonsäurechlorid, Kupferphthalocyanin-(4)-tri- und -tetrasulfonsäurechlorid, sowie weiterhin die Sulfonsäurechloride dieser Art, die am Phthalocyaninkern zusätzlich andere Substituenten, wie Phenylreste und Halogenatome, enthalten, wie beispielsweise die Sulfonsäurechloride des Tetraphenyl-Kupferphthalocyanins oder Tetrachlor-Nickelphthalocyanins.

Säurebindende Mittel, die in dem erfindungsgemäßen Verfahren zur Herstellung der Phthalocyaninfarbstoffe der allgemeinen Formel (1) verwendet werden, sind beispielsweise die Hydroxyde, Carbonate, Hydrogencarbonate, sekundären Phosphate, tertiären Phosphate, Borate und Acetate der Metalle der ersten bis dritten Gruppe des Periodensystems, vorzugsweise der Alkalimetalle, wie von Natrium, Kalium und Lithium, und der Erdalkalimetalle, wie die des Calciums.

Das erfindungsgemäße Verfahren zur Herstellung der Verbindungen (1) wird bevorzugt in wäßrigem Medium durchgeführt. Zur Verbesserung der Löslichkeit der Ausgangs- bzw. Endprodukte im wäßrigen Reaktionsmedium kann man gegebenenfalls ein organisches Lösemittel, vorzugsweise ein Amid einer aliphatischen Carbonsäure, wie Dimethylformamid oder N-Methyl-pyrrolidon, zusetzen.

Die Abscheidung der erfindungsgemäß hergestellten Phthalocyaninfarbstoffe der allgemeinen Formel (1), nachfolgend als "Farbstoffe (1)" bezeichnet, aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Sie haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der Farbstoffe (1) zum Färben (einschließliches Bedrucken) von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern und Garnen, wie Strängen, Wickelkörpern und Geweben.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern; wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Farbstoffe (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen in sehr guten Farbausbeuten und mit ausgezeichnetem Farbaufbau. Man färbt bei Temperaturen zwischen 40 und 105°C,

gegebenenfalls bei Temperaturen bis zu 130 ° C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls Färbungen mit ausgezeichneten Farbausbeuten und sehr gutem Farbaufbau erhalten, wobei durch Verweilen bei Raumtemperatur oder erhöhter Temperatur, beispielsweise bis zu etwa 60 ° C, durch Dämpfen oder mit Trockenhitze in üblicher Weise fixiert werden kann.

Ebenfalls erhält man nach den üblichen Druckverfahren für Cellulosefasern, – die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103 ° C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, – farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch. Bei der Fixierung mittels Trockenhitze nach den üblichen Thermofixierverfahren verwendet man Heißluft von 120 bis 200 ° C. Neben dem üblichen Wasserdampf von 101 bis 103 ° C kann auch überhitzter Dampf und Druckdampf von Temperaturen bis zu 160 ° C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen.
Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe (1) mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 ° C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98 ° C durchgeführt. Die Färbungen können aber auch bei Siedetemperatur oder bei Temperaturen bis zu 120 ° C (unter Druck) ausgeführt werden.

Die mit den erfindungsgemäßen Verbindungen (1) hergestellten Färbungen und Drucke auf Cellulosefasermaterialien besitzen eine hohe Farbstärke, außerdem gute Lichtechtheiten und gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen.

Die nachstehenden Beispiele dienen zur Erläuterung der Erfindung. Die formelmäßig beschriebenen Verbindungen sind in Form der freien Säure angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium-

oder Kaliumsalze, in die Synthese eingesetzt werden.

Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter. Der Formelrest CuPc bedeutet den Kupferphthalocyaninrest, und der Formelrest NiPc stellt den Nickelphthalocyaninrest dar.

Die für die erfindungsgemäßen Verbindungen angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$ – Werte bei der Farbtonangabe in Klammern gesetzt; die Wellenlängenangabe bezieht sich auf nm.

Beispiel 1

Man rührt 138 Teile Kupferphthalocyanin – tetrasulfochlorid in 140 Teilen einer 25 %igen wäßrigen Ammoniaklösung während mehrerer Stunden bei 40 bis 60 °C, filtriert danach das ausgefallene Kupferphthalocyanin – tetrasulfonamid ab, löst es in 1000 Teilen Wasser bei einem pH – Wert von 10 bis 14 und versetzt diese Lösung mit 38 Teilen Cyanurchlorid, wobei man diese Umsetzungsreaktion bei einem pH – Wert zwischen 9 und 11 und einer Temperatur zwischen 0 und 3 °C durchführt. Die erhaltene Kupferphthalocyanin – dichlortriazinyl – sulfonamid – Verbindung wird sodann mit 28 Teilen 4 – ($\beta$ – Sulfato – ethylsulfonyl) – anilin bei einem pH – Wert von 3,5 bis 6 und einer Temperatur zwischen 20 und 40 °C umgesetzt.

Der erhaltene erfindungsgemäße Kupferphthalocyaninfarbstoff besitzt, in Form der freien Säure geschrieben, die Formel

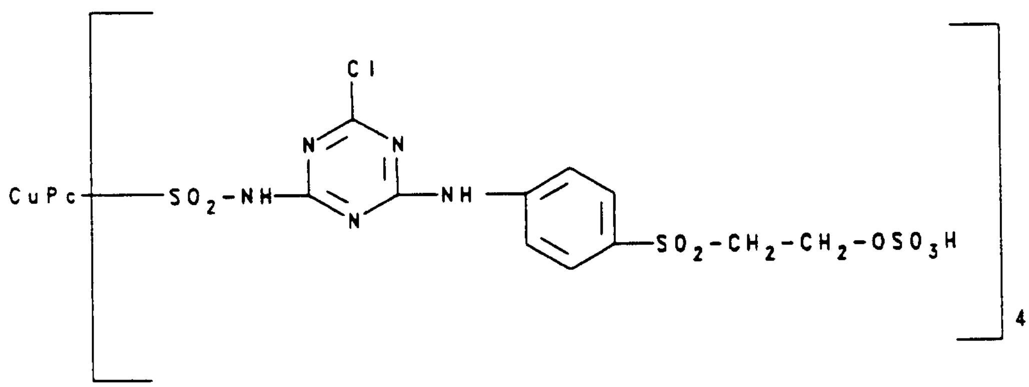

($\lambda_{max}$ = 601 nm).

Er wird durch Eindampfen der Syntheselösung unter reduziertem Druck oder durch Sprühtrocknung als Alkalimetallsalz (Natriumsalz) isoliert. Er besitzt sehr gute faserreaktive Eigenschaften und eignet sich sehr gut nach den in der Technik für faserreaktive Farbstoffe üblichen Färbe- und Druckverfahren zum Färben der in der Beschreibung genannten Materialien, insbesondere Cellulosefasermaterialien, wobei farbstarke türkisfarbene Färbungen und Drucke mit guten Echtheitseigenschaften erhalten werden, von denen insbesondere die guten Licht-, Naßlicht- und Chlorechtheiten hervorgehoben werden können.

Beispiel 2

Zur Herstellung eines erfindungsgemäßen Kupferphthalocyaninfarbstoffes verfährt man gemäß der Verfahrensweise des Beispieles 1, setzt jedoch in der letzten Reaktionsstufe anstelle des 4 – ($\beta$ – Sulfato – ethylsulfonyl) – anilins die gleiche Menge an 3 – ($\beta$ – Sulfatoethylsulfonyl) – anilin ein. Der erfindungsgemäße Farbstoff besitzt im sichtbaren Bereich ein Absorptionsmaximum bei 601 nm und zeigt die gleichen guten färberischen Eigenschaften wie der erfindungsgemäße Farbstoff des Beispieles 1.

Beispiel 3

138 Teile Kupferphthalocyanin – trisulfochlorid rührt man während mehrerer Stunden bei 40 bis 60 °C in 150 Teile einer wäßrigen 25 %igen Ammioniaklösung, filtriert das ausgefallene Kupferphthalocyanin –

trisulfonamid ab, löst es in 1000 Teilen Wasser bei einem pH-Wert von 10 bis 14 und versetzt diese Lösung mit 28 Teilen Cyanurchlorid, wobei man die Kondensationsreaktion bei einem pH-Wert zwischen 9 und 11 und einer Temperatur zwischen 0 und 3°C durchführt. Die erhaltene Kupferphthalocyanin-dichlortriazinyl-sulfonamid-Verbindung versetzt man mit 21 Teilen 4-(β-Sulfatoethylsulfonyl)-anilin und führt die zweite Kondensationsreaktion bei einem pH-Wert zwischen 3,5 und 6 und einer Temperatur zwischen 20 und 40°C durch.

Der erhaltene erfindungsgemäße Farbstoff, der, in Form der freien Säure geschrieben, der Formel

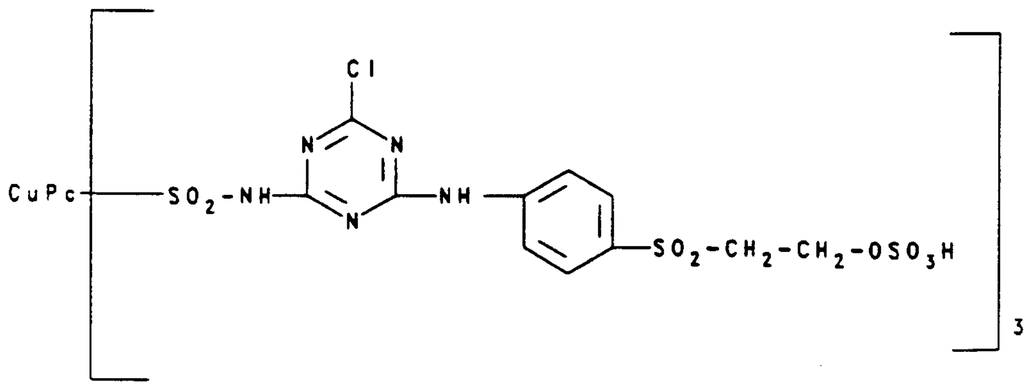

($\lambda_{max}$ = 602 nm)

entspricht, wird durch Eindampfen der Syntheselösung unter reduziertem Druck oder durch Sprühtrocknung als Alkalimetallsalz (Natriumsalz) isoliert. Er besitzt faserreaktive Eigenschaften und eignet sich sehr gut als Farbstoff nach den in der Technik üblichen Färbeweisen zum Färben der in der Beschreibung genannten Materialien, insbesondere Cellulosefasermaterialien; man erhält mit ihm farbstarke, türkisfarbene Färbungen und Drucke mit guten Echtheitseigenschaften, von denen insbesondere die Licht-, Naßlicht- und Chlorechtheiten hervorgehoben werden können.

Beispiel 4

Zur Herstellung eines erfindungsgemäßen Kupferphthalocyaninfarbstoffes verfährt man gemäß der Verfahrensweise des Beispieles 1, setzt jedoch in der letzten Reaktionsstufe anstelle des 4-(β-Sulfatoethylsulfonyl)-anilins die gleiche Menge an 3-(β-Sulfatoethylsulfonyl)-anilin ein. Der erfindungsgemäße Farbstoff besitzt im sichtbaren Bereich ein Absorptionsmaximum bei 602 nm und zeigt die gleichen guten färberischen Eigenschaften wie der erfindungsgemäße Farbstoff des Beispieles 1.

Beispiel 5

Man rührt 138 Teile eines Kupferphthalocyanin-sulfochlorids mit durchschnittlich 2,2 Sulfochloridgruppen im Kupferphthalocyaninmolekül in 140 Teilen einer 25 %igen wäßrigen Ammoniaklösung während mehrerer Stunden bei 40 bis 60°C, filtriert danach das ausgefallene Kupferphthalocyaninsulfonamid ab, löst es in 1000 Teilen Wasser bei einem pH-Wert von 10 bis 14 und versetzt diese Lösung mit 21 Teilen Cyanurchlorid, wobei man diese Umsetzungsreaktion bei einem pH-Wert zwischen 9 und 11 und einer Temperatur zwischen 0 und 3°C durchführt.

Die erhaltene Kupferphthalocyanin-dichlortriazinyl-sulfonamid-Verbindung wird sodann mit 16 Teilen 4-(β-Sulfatoethylsulfonyl)-anilin bei einem pH-Wert von 3,5 bis 6 und einer Temperatur zwischen 20 und 40°C umgesetzt.

Der erhaltene erfindungsgemäße Kupferphthalocyaninfarbstoff besitzt, in Form der freien Säure geschrieben, die Formel

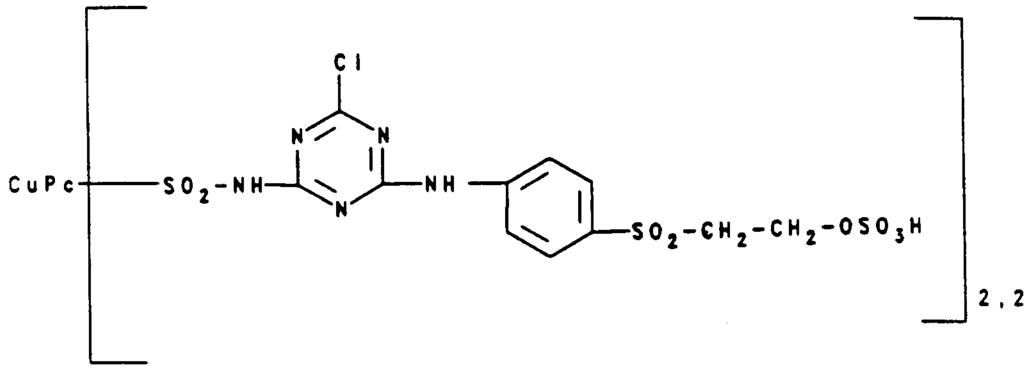

($\lambda_{max}$ = 602 nm).

Er wird durch Eindampfen der Syntheselösung unter reduziertem Druck oder durch Sprühtrocknung als Alkalimetallsalz (Natriumsalz) isoliert. Er besitzt sehr gute faserreaktive Eigenschaften und eignet sich sehr gut nach den in der Technik für faserreaktive Farbstoffe üblichen Färbe- und Druckverfahren zum Färben der in der Beschreibung genannten Materialien, insbesondere Cellulosefasermaterialien, wobei farbstarke türkisfarbene Färbungen und Drucke mit guten Echtheitseigenschaften erhalten werden, von denen insbesondere die guten Licht-, Naßlicht- und Chlorechtheiten hervorgehoben werden können.

Beispiel 6

Zur Herstellung eines erfindungsgemäßen Kupferphthalocyaninfarbstoffes verfährt man gemäß der Verfahrensweise des Beispieles 1, setzt jedoch in der letzten Reaktionsstufe anstelle des 4-(β-Sulfatoethylsulfonyl)-anilins die gleiche Menge an 3-(β-Sulfatoethylsulfonyl)-anilin ein. Der erfindungsgemäße Farbstoff besitzt im sichtbaren Bereich ein Absorptionsmaximum bei 602 nm und zeigt die gleichen guten färberischen Eigenschaften wie der erfindungsgemäße Farbstoff des Beispieles 1.

Beispiele 7 bis 100

In den nachfolgenden Tabellenbeispielen sind weitere erfindungsgemäße Kupferphthalocyaninfarbstoffe entsprechend der allgemeinen Formel (A)

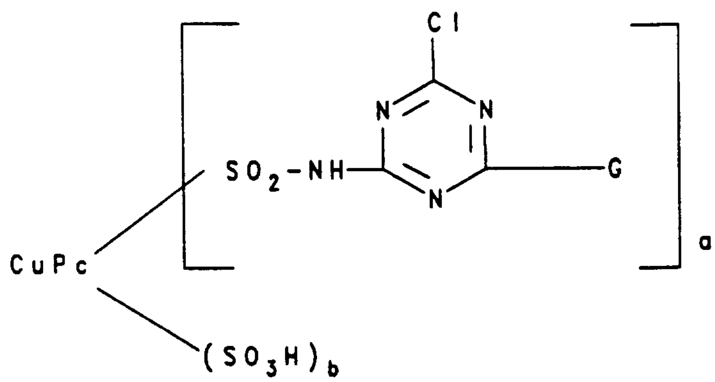

(A)

mit Hilfe von deren Formelkomponenten beschrieben. Sie lassen sich in erfindungsgemäßer Weise, beispielsweise nach einem der Beispiele 1 bis 6, mittels ihrer aus dem jeweiligen Tabellenbeispiel in Verbindung mit der Formel (A) ersichtlichen Komponenten (so einem gegebenenfalls sulfogruppenhaltigen Kupferphthalocyanin-sulfonsäurechlorid, Ammoniak, Cyanurchlorid und einer faserreaktiven Aminoverbindung entsprechend der in der Beschreibung angegebenen allgemeinen Formel (8)) herstellen. Sie besitzen

sehr gute faserreaktive Farbstoffeigenschaften und liefern auf den in der Beschreibung genannten Materialien, insbesondere Cellulosefasermaterialien, wie Baumwolle, nach den bekannten Färbe- und Druckverfahren farbstarke, echte Färbungen und Drucke in dem in dem jeweiligen Tabellenbeispiel für Färbungen auf Baumwolle angegebenen Farbton.

Kupferphthalocyaninfarbstoffe der Formel (A)

| Bsp. | Rest G | Index a | Index b | Farbton |
|---|---|---|---|---|
| 7 | 4-(ß-Sulfatoethyl-sulfonyl)-phenylamino | 1 | 3 | türkis (603) |
| 8 | dito | 1 | 2 | türkis (603) |
| 9 | 3-(ß-Sulfatoethyl-sulfonyl)-phenylamino | 1 | 3 | türkis (603) |
| 10 | dito | 1 | 2 | türkis (603) |
| 11 | 2-(ß-Sulfatoethyl-sulfonyl)-phenylamino | 0 | 4 | türkis (601) |
| 12 | dito | 0 | 3 | türkis (601) |
| 13 | dito | 0 | 2,2 | türkis (601) |
| 14 | dito | 1 | 3 | türkis (603) |
| 15 | dito | 1 | 2 | türkis (603) |
| 16 | 3-(ß-Sulfatoethyl-sulfonyl)-propylamino | 0 | 4 | türkis (600) |
| 17 | dito | 0 | 3 | türkis (600) |
| 18 | dito | 0 | 2,2 | türkis (600) |
| 19 | dito | 1 | 3 | türkis (601) |
| 20 | dito | 1 | 2 | türkis (601) |
| 21 | 2-(ß-Sulfatoethyl-sulfonyl)-ethylamino | 0 | 4 | türkis (600) |
| 22 | dito | 0 | 3 | türkis (600) |
| 23 | dito | 0 | 2,2 | türkis (600) |
| 24 | dito | 1 | 3 | türkis (601) |
| 25 | dito | 1 | 2 | türkis (601) |

| Bsp. | Rest G | Index a | Index b | Farbton |
|---|---|---|---|---|
| 26 | 3-(ß-Chlorethyl-sulfonyl)-propylamino | 0 | 4 | türkis (600) |
| 27 | dito | 0 | 3 | türkis (600) |
| 28 | dito | 0 | 2,2 | türkis (600) |
| 29 | dito | 1 | 3 | türkis (601) |
| 30 | dito | 1 | 2 | türkis (601) |
| 31 | 2-(ß-Chlorethyl-sulfonyl)-ethylamino | 0 | 4 | türkis (601) |
| 32 | dito | 0 | 3 | türkis (601) |
| 33 | dito | 0 | 2,2 | türkis (601) |
| 34 | dito | 1 | 3 | türkis (603) |
| 35 | dito | 1 | 2 | türkis (603) |
| 36 | 2-Methoxy-5-(ß-sulfatoethyl-sulfonyl)-phenylamino | 0 | 4 | türkis (605) |
| 37 | dito | 0 | 3 | türkis (605) |
| 38 | dito | 0 | 2,2 | türkis (605) |
| 39 | dito | 1 | 3 | türkis (604) |
| 40 | dito | 1 | 2 | türkis (604) |
| 41 | 2-Methoxy-4-(ß-sulfatoethyl-sulfonyl)-phenylamino | 0 | 4 | türkis (604) |
| 42 | dito | 0 | 3 | türkis (604) |
| 43 | dito | 0 | 2,2 | türkis (604) |
| 44 | dito | 1 | 3 | türkis (603) |

| Bsp. | Rest G | Index a | Index b | Farbton |
|---|---|---|---|---|
| 45 | dito | 1 | 2 | türkis (603) |
| 46 | N-Ethyl-4-(ß-sulfato-ethylsulfonyl)-phenylamino | 0 | 4 | türkis (603) |
| 47 | dito | 0 | 3 | türkis (603) |
| 48 | dito | 0 | 2,2 | türkis (603) |
| 49 | dito | 1 | 3 | türkis (603) |
| 50 | dito | 0 | 4 | türkis (603 |
| 51 | N-Ethyl-3-(ß-sulfato-ethylsulfonyl)-phenylamino | 0 | 4 | türkis (603) |
| 52 | dito | 0 | 3 | türkis (603) |
| 53 | dito | 0 | 2,2 | türkis (603) |
| 54 | dito | 1 | 3 | türkis (603) |
| 55 | dito | 0 | 4 | türkis (603) |
| 56 | 2-Sulfo-5-(ß-sulfato-ethylsulfonyl)-phenylamino | 0 | 4 | türkis (599) |
| 57 | dito | 0 | 3 | türkis (599) |
| 58 | dito | 0 | 2,2 | türkis (599) |
| 59 | dito | 1 | 3 | türkis (598) |
| 60 | dito | 0 | 4 | türkis (598) |
| 61 | 2-Carboxy-5-(-ß-sulfatoethylsulfonyl)-phenylamino | 0 | 4 | türkis (599) |

| Bsp. | Rest G | Index a | Index b | Farbton |
|---|---|---|---|---|
| 62 | dito | 0 | 3 | türkis (599) |
| 63 | dito | 0 | 2,2 | türkis (599) |
| 64 | dito | 1 | 3 | türkis (597) |
| 65 | dito | 0 | 4 | türkis (597) |
| 66 | 2-Hydroxy-5-(ß-sulfatoethylsulfonyl)-phenylamino | 0 | 4 | türkis (602) |
| 67 | dito | 0 | 3 | türkis (602) |
| 68 | dito | 0 | 2,2 | türkis (602) |
| 69 | dito | 1 | 3 | türkis (603) |
| 70 | dito | 1 | 2,2 | türkis (603) |
| 71 | 2-Hydroxy-4-(ß-sulfatoethylsulfonyl)-phenylamino | 0 | 4 | türkis (602) |
| 72 | dito | 0 | 3 | türkis (602) |
| 73 | dito | 0 | 2,2 | türkis (602) |
| 74 | dito | 1 | 2 | türkis (603) |
| 75 | dito | 1 | 3 | türkis (603) |
| 76 | 2-[4'-(ß-Sulfatoethyl-sulfonyl)-phenyl]-ethylamino | 0 | 4 | türkis (605) |
| 77 | dito | 0 | 3 | türkis (605) |
| 78 | dito | 0 | 2,2 | türkis (605) |
| 79 | dito | 1 | 3 | türkis (604) |
| 80 | dito | 1 | 2 | türkis (604) |

| Bsp. | Rest G | Index a | Index b | Farbton |
|---|---|---|---|---|
| 81 | N,N-Bis-[2-(ß-Chlorethylsulfonyl)-ethyl]-amino | 0 | 4 | türkis (599) |
| 82 | dito | 0 | 3 | türkis (599) |
| 83 | dito | 0 | 2,2 | türkis (599) |
| 84 | dito | 1 | 2 | türkis (600) |
| 85 | dito | 1 | 3 | türkis (600) |
| 86 | 2-[2'-(ß-Sulfatoethyl-sulfonyl)-ethoxy]-ethylamino | 0 | 4 | türkis (600) |
| 87 | dito | 0 | 3 | türkis (600) |
| 88 | dito | 0 | 2,2 | türkis (600) |
| 89 | dito | 1 | 3 | türkis (601) |
| 90 | dito | 1 | 2 | türkis (601) |
| 91 | 2-[2'-(ß-Chlorethyl-sulfonyl)-ethoxy]-ethylamino | 0 | 4 | türkis (604) |
| 92 | dito | 0 | 3 | türkis (604) |
| 93 | dito | 0 | 2,2 | türkis (604) |
| 94 | dito | 1 | 3 | türkis (604) |
| 95 | dito | 1 | 2 | türkis (604) |
| 96 | 2,5-Di-(ß-sulfatoethyl-sulfonyl)-phenylamino | 0 | 4 | türkis (604) |
| 97 | dito | 0 | 3 | türkis (604) |
| 98 | dito | 0 | 2,2 | türkis (604) |

| Bsp. | Rest G | Index a | Index b | Farbton |
|---|---|---|---|---|
| 99 | dito | 1 | 3 | türkis (603) |
| 100 | dito | 1 | 2 | türkis (603) |

Beispiel 101

Man rührt 138 Teile Kupferphthalocyanin-tetrasulfochlorid in 75 Teilen einer 25 %igen wäßrigen Ammoniaklösung während mehrerer Stunden bei 40 bis 60 °C, filtriert danach das ausgefallene Kupferphthalocyanin-tetrasulfonamid ab, löst es in 1000 Teilen Wasser bei einem pH-Wert von 10 bis 14 und versetzt diese Lösung mit einer Suspension von 38 Teilen Cyanurchlorid in 200 Teilen Wasser. Die Umsetzung führt man bei einem pH-Wert zwischen 9 und 11 und einer Temperatur zwischen 0 und 3 °C durch.

Die erhaltene Lösung der Kupferphthalocyanin-dichlortriazinyl-sulfonamid-Verbindung wird mit 4,1 Teilen Cyanamid versetzt. Die Umsetzung erfolgt bei einem pH-Wert zwischen 4 und 9 und einer Temperatur zwischen 20 und 40 °C. Anschließend gibt man 28 Teile 4-(β-Sulfatoethylsulfonyl)-anilin hinzu und führt die Reaktion bei einem pH-Wert von 3,5 bis 6 und einer Temperatur zwischen 40 und 90 °C zu Ende.

Der erhaltene erfindungsgemäße Kupferphthalocyaninfarbstoff besitzt, in Form der freien Säure geschrieben, die Formel

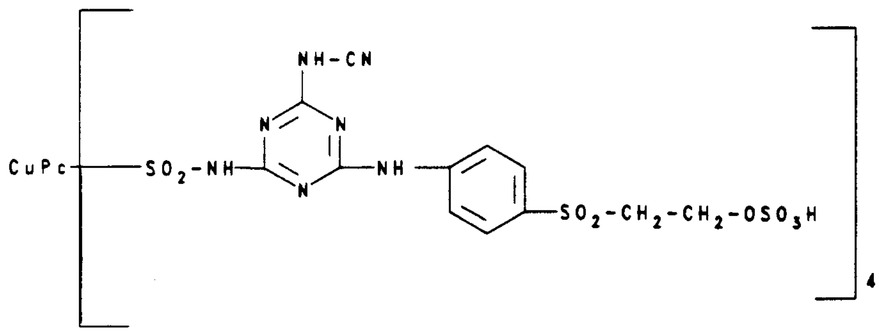

($\lambda_{max}$ = 599 nm).

Er wird durch Eindampfen der Syntheselösung unter reduziertem Druck oder durch Sprühtrocknung als Alkalimetallsalz (Natriumsalz) isoliert. Er besitzt sehr gute faserreaktive Eigenschaften und eignet sich sehr gut nach den in der Technik für faserreaktive Farbstoffe üblichen Färbe- und Druckverfahren zum Färben der in der Beschreibung genannten Materialien, insbesondere Cellulosefasermaterialien, wobei farbstarke türkisfarbene Färbungen und Drucke mit guten Echtheitseigenschaften erhalten werden, von denen insbesondere die guten Licht-, Naßlicht- und Chlorechtheiten hervorgehoben werden können.

Beispiel 102

Zur Herstellung eines erfindungsgemäßen Kupferphthalocyaninfarbstoffes verfährt man gemäß der Verfahrensweise des Beispieles 101, setzt jedoch in der letzten Reaktionsstufe anstelle des 4-(β-Sulfatoethylsulfonyl)-anilins die gleiche Menge an 3-(β-Sulfatoethylsulfonyl)-anilin ein. Der erfindungsgemäße Farbstoff besitzt im sichtbaren Bereich ein Absorptionsmaximum bei 599 nm und zeigt die gleichen guten färberischen Eigenschaften wie der erfindungsgemäße Farbstoff des Beispieles 101.

Beispiel 103

138 Teile Kupferphthalocyanin-trisulfochlorid rührt man während mehrerer Stunden bei 40 bis 60°C in 75 Teilen einer wäßrigen 25 %igen Ammioniaklösung, filtriert das ausgefallene Kupferphthalocyanin-trisulfonamid ab, löst es in 1000 Teilen Wasser bei einem pH-Wert von 10 bis 14, versetzt diese Lösung mit 230 Teilen einer wäßrigen Suspension von 28 Teilen Cyanurchlorid und führt die Kondensationsreaktion bei einem pH-Wert zwischen 9 und 11 und einer Temperatur zwischen 0 und 3°C durch. Die erhaltene Lösung der Kupferphthalocyanin-dichlortriazinyl-sulfonamid-Verbindung versetzt man sodann mit 3,1 Teilen Cyanamid und führt die Umsetzung bei einem pH-Wert zwischen 8 und 10 und bei einer Temperatur zwischen 20 und 40°C durch. Anschließend erfolgt die Umsetzung mit 21 Teilen 4-(β-Sulfatoethylsulfonyl)-anilin bei einem pH-Wert zwischen 3,5 und 6 und einer Temperatur zwischen 40 und 90°C durch.

Der erhaltene erfindungsgemäße Farbstoff, der, in Form der freien Säure geschrieben, der Formel

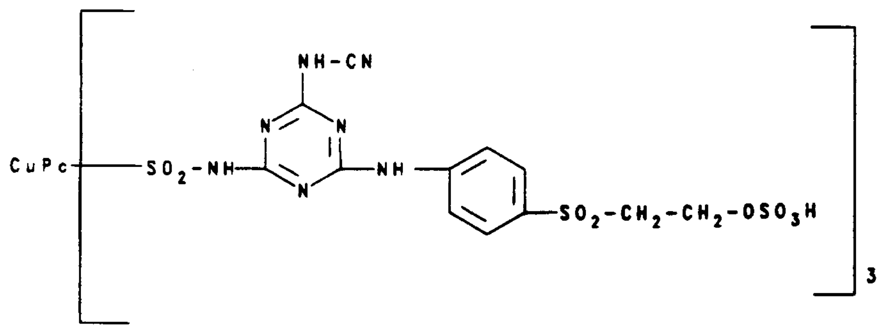

($\lambda_{max}$ = 599 nm)

entspricht, wird durch Eindampfen der Syntheselösung unter reduziertem Druck oder durch Sprühtrocknung als Alkalimetallsalz (Natriumsalz) isoliert. Er besitzt faserreaktive Eigenschaften und eignet sich sehr gut als Farbstoff nach den in der Technik üblichen Färbeweisen zum Färben der in der Beschreibung genannten Materialien, insbesondere Cellulosefasermaterialien; man erhält mit ihm farbstarke, türkisfarbene Färbungen und Drucke mit guten Echtheitseigenschaften, von denen insbesondere die Licht-, Naßlicht- und Chlorechtheiten hervorgehoben werden können.

Beispiel 104

Zur Herstellung eines erfindungsgemäßen Kupferphthalocyaninfarbstoffes verfährt man gemäß der Verfahrensweise des Beispieles 103, setzt jedoch in der letzten Reaktionsstufe anstelle des 4-(β-Sulfatoethylsulfonyl)-anilins die gleice Menge an 3-(β-Sulfatoethylsulfonyl)-anilin ein. Der erfindungsgemäße Farbstoff besitzt im sichtbaren Bereich ein Absorptionsmaximum bei 599 nm und zeigt die gleichen guten färberischen Eigenschaften wie der erfindungsgemäße Farbstoff des Beispieles 103.

Beispiel 105

Man rührt 138 Teile eines Kupferphthalocyanin-sulfochlorids mit durchschnittlich 2,2 Sulfochloridgruppen im Kupferphthalocyaninmolekül in 75 Teilen einer 25 %igen wäßrigen Ammoniaklösung während mehrerer Stunden bei 40 bis 60°C, filtriert danach das ausgefallene Kupferphthalocyaninsulfonamid ab, löst es in 1000 Teilen Wasser bei einem pH-Wert von 10 bis 14, versetzt diese Lösung mit 220 Teilen einer wäßrigen Suspension von 21 Teilen Cyanurchlorid und führt die Umsetzung bei einem pH-Wert zwischen 9 und 11 und einer Temperatur zwischen 0 und 3°C durch. Zu der so erhaltenen Kupferphthalocyanin-dichlortriazinyl-sulfonamid-Verbindung gibt man 2,35 Teile Cyanamid und führt die Umsetzung bei 20 bis 40°C und einem pH-Wert von 8 bis 10 durch. Die Cyanamido-chlor-triazinylamino-Verbindung wird sodann mit 16 Teilen 4-(β-Sulfatoethylsulfonyl)-anilin bei einem pH-Wert von 3,5 bis 6 und einer Temperatur zwischen 40 und 90°C umgesetzt.

Der erhaltene erfindungsgemäße Kupferphthalocyaninfarbstoff besitzt, in Form der freien Säure ge-schrieben, die Formel

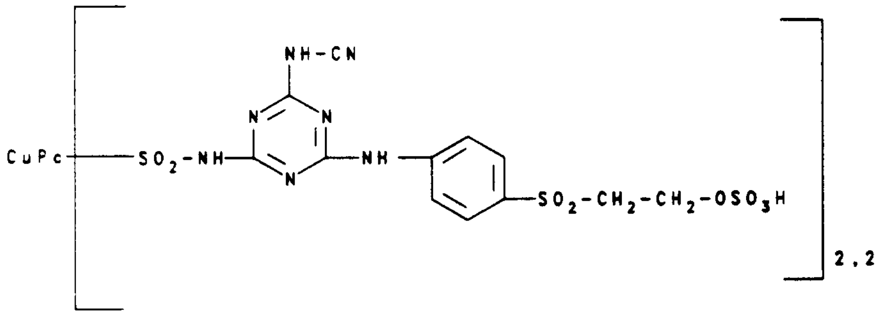

($\lambda_{max}$ = 599 nm).

Er wird durch Eindampfen der Syntheselösung unter reduziertem Druck oder durch Sprühtrocknung als Alkalimetallsalz (Nalriumsalz) isoliert. Er besitzt sehr gute faserreaktive Eigenschaften und eignet sich sehr gut nach den in der Technik für faserreaktive Farbstoffe üblichen Färbe- und Druckverfahren zum Färben der in der Beschreibung genannten Materialien, insbesondere Cellulosefasermaterialien, wobei farbstarke türkisfarbene Färbungen und Drucke mit guten Echtheitseigenschaften erhalten werden, von denen insbesondere die guten Licht-, Naßlicht- und Chlorechtheiten hervorgehoben werden können.

Beispiel 106

Zur Herstellung eines erfindungsgemäßen Kupferphthalocyaninfarbstoffes verfährt man gemäß der Verfahrensweise des Beispieles 105, setzt jedoch in der letzten Reaktionsstufe anstelle des 4-(β-Sulfatoethylsulfonyl)-anilins die gleiche Menge an 3-(β-Sulfatoethylsulfonyl)-anilin ein. Der erfindungsgemäße Farbstoff besitzt ebenfalls im sichtbaren Bereich ein Absorptionsmaximum bei 599 nm und zeigt die gleichen guten färberischen Eigenschaften wie der erfindungsgemäße Farbstoff des Beispieles 105.

Beispiele 107 bis 200

In den nachfolgenden Tabellenbeispielen sind weitere erfindungsgemäße Kupferphthalocyaninfarbstoffe entsprechend der allgemeinen Formel (B)

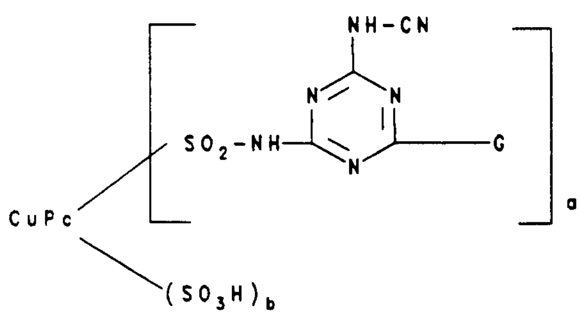

(B)

mit Hilfe von deren Formelkomponenten beschrieben. Sie lassen sich in erfindungsgemäßer Weise, beispielsweise nach einem der Beispiele 101 bis 106, mittels ihrer aus dem jeweiligen Tabellenbeispiel in Verbindung mit der Formel (B) ersichtlichen Komponenten (so einem gegebenenfalls sulfogruppenhaltigen Kupferphthalocyanin-sulfonsäurechlorid, Ammoniak, Cyanurchlorid, Cyanamid und einer faserreaktiven Aminoverbindung entsprechend der in der Beschreibung angegebenen allgemeinen Formel (8)) herstellen. Sie besitzen sehr gute faserreaktive Farbstoffeigenschaften und liefern auf den in der Beschreibung genannten Materialien, insbesondere Cellulosefasermaterialien, wie Baumwolle, nach den bekannten Färbe- und Druckvertahren farbstarke, echte Färbungen und Drucke in dem in dem jeweiligen Tabellenbeispiel für Färbungen auf Baumwolle angegebenen Farbton.

Kupferphthalocyaninfarbstoff der Formel (B)

| Bsp. | Rest G | Index a | Index b | Farbton |
|---|---|---|---|---|
| 107 | 4-(ß-Sulfatoethyl-sulfonyl)-phenylamino | 1 | 3 | türkis (598) |
| 108 | dito | 1 | 2 | türkis (598) |
| 109 | 3-(ß-Sulfatoethyl-sulfonyl)-phenylamino | 1 | 3 | türkis (598) |
| 110 | dito | 1 | 2 | türkis (598) |
| 111 | 2-(ß-Sulfatoethyl-sulfonyl)-phenylamino | 0 | 4 | türkis (599) |
| 112 | dito | 0 | 3 | türkis (599) |
| 113 | dito | 0 | 2,2 | türkis (599) |
| 114 | dito | 1 | 3 | türkis (598) |
| 115 | dito | 1 | 2 | türkis (598) |
| 116 | 3-(ß-Sulfatoethyl-sulfonyl)-propylamino | 0 | 4 | türkis (605) |
| 117 | dito | 0 | 3 | türkis (605) |
| 118 | dito | 0 | 2,2 | türkis (605) |
| 119 | dito | 1 | 3 | türkis (604) |
| 120 | dito | 1 | 2 | türkis (604) |
| 121 | 2-(ß-Sulfatoethyl-sulfonyl)-ethylamino | 0 | 4 | türkis (606) |
| 122 | dito | 0 | 3 | türkis (606) |
| 123 | dito | 0 | 2,2 | türkis (606) |
| 124 | dito | 1 | 3 | türkis (605) |
| 125 | dito | 1 | 2 | türkis (605) |

| Bsp. | Rest G | Index a | Index b | Farbton |
|---|---|---|---|---|
| 126 | 3-(ß-Chlorethyl-sulfonyl)-propylamino | 0 | 4 | türkis (607) |
| 127 | dito | 0 | 3 | türkis (607) |
| 128 | dito | 0 | 2,2 | türkis (607) |
| 129 | dito | 1 | 3 | türkis (605) |
| 130 | dito | 1 | 2 | türkis (605) |
| 131 | 2-(ß-Chlorethyl-sulfonyl)-ethylamino | 0 | 4 | türkis (601) |
| 132 | dito | 0 | 3 | türkis (601) |
| 133 | dito | 0 | 2,2 | türkis (601) |
| 134 | dito | 1 | 3 | türkis (603) |
| 135 | dito | 1 | 2 | türkis (603) |
| 136 | 2-Methoxy-5-(ß-sulfatoethyl-sulfonyl)-phenylamino | 0 | 4 | türkis (604) |
| 137 | dito | 0 | 3 | türkis (604) |
| 138 | dito | 0 | 2,2 | türkis (604) |
| 139 | dito | 1 | 3 | türkis (604) |
| 140 | dito | 1 | 2 | türkis (604) |
| 141 | 2-Methoxy-4-(ß-sulfatoethyl-sulfonyl)-phenylamino | 0 | 4 | türkis (605) |
| 142 | dito | 0 | 3 | türkis (605) |
| 143 | dito | 0 | 2,2 | türkis (604) |
| 144 | dito | 1 | 3 | türkis (603) |

| Bsp. | Rest G | Index a | Index b | Farbton |
|---|---|---|---|---|
| 145 | dito | 1 | 2 | türkis (603) |
| 146 | N-Ethyl-4-(ß-sulfato-ethylsulfonyl)-phenylamino | 0 | 4 | türkis (604) |
| 147 | dito | 0 | 3 | türkis (604) |
| 148 | dito | 0 | 2,2 | türkis (604) |
| 149 | dito | 1 | 3 | türkis (604) |
| 150 | dito | 0 | 4 | türkis (604) |
| 151 | N-Ethyl-3-(ß-sulfato-ethylsulfonyl)-phenylamino | 0 | 4 | türkis (604) |
| 152 | dito | 0 | 3 | türkis (604) |
| 153 | dito | 0 | 2,2 | türkis (604) |
| 154 | dito | 1 | 3 | türkis (604) |
| 155 | dito | 0 | 4 | türkis (604) |
| 156 | 2,5-Di-(ß-sulfoethyl-sulfonyl)-phenylamino | 0 | 4 | türkis (600) |
| 157 | dito | 0 | 3 | türkis (600) |
| 158 | dito | 0 | 2,2 | türkis (600) |
| 159 | dito | 1 | 3 | türkis (599) |
| 160 | dito | 0 | 4 | türkis (599) |
| 161 | 2-Carboxy-5-(-ß-sulfatoethylsulfonyl)-phenylamino | 0 | 4 | türkis (598) |
| 162 | dito | 0 | 3 | türkis (598) |

| Bsp. | Rest G | Index a | Index b | Farbton |
|---|---|---|---|---|
| 163 | dito | 0 | 2,2 | türkis (598) |
| 164 | dito | 1 | 3 | türkis (597) |
| 165 | dito | 0 | 4 | türkis (597) |
| 166 | 2-Hydroxy-5-(ß-sulfatoethylsulfonyl)-phenylamino | 0 | 4 | türkis (604) |
| 167 | dito | 0 | 3 | türkis (604) |
| 168 | dito | 0 | 2,2 | türkis (604) |
| 169 | dito | 1 | 3 | türkis (603) |
| 170 | dito | 1 | 2,2 | türkis (603) |
| 171 | 2-Hydroxy-4-(ß-sulfatoethylsulfonyl)-phenylamino | 0 | 4 | türkis (605) |
| 172 | dito | 0 | 3 | türkis (605) |
| 173 | dito | 0 | 2,2 | türkis (605) |
| 174 | dito | 1 | 2 | türkis (604) |
| 175 | dito | 1 | 3 | türkis (604) |
| 176 | 2-[4'-(ß-Sulfatoethyl-sulfonyl)-phenyl]-ethylamino | 0 | 4 | türkis (607) |
| 177 | dito | 0 | 3 | türkis (607) |
| 178 | dito | 0 | 2,2 | türkis (607) |
| 179 | dito | 1 | 3 | türkis (606) |
| 180 | dito | 1 | 2 | türkis (606) |

| Bsp. | Rest G | Index a | Index b | Farbton |
|---|---|---|---|---|
| 181 | N,N-Bis-[2-(ß-Chlorethylsulfonyl)-ethyl]-amino | 0 | 4 | türkis (599) |
| 182 | dito | 0 | 3 | türkis (599) |
| 183 | dito | 0 | 2,2 | türkis (599) |
| 184 | dito | 1 | 2 | türkis (597) |
| 185 | dito | 1 | 3 | türkis (597) |
| 186 | 2-[2'-(ß-Sulfatoethyl-sulfonyl)-ethoxy]-ethylamino | 0 | 4 | türkis (606) |
| 187 | dito | 0 | 3 | türkis (606) |
| 188 | dito | 0 | 2,2 | türkis (606) |
| 189 | dito | 1 | 3 | türkis (605) |
| 190 | dito | 1 | 2 | türkis (605) |
| 191 | 2-[2'-(ß-Chlorethyl-sulfonyl)-ethoxy]-ethylamino | 0 | 4 | türkis (606) |
| 192 | dito | 0 | 3 | türkis (606) |
| 193 | dito | 0 | 2,2 | türkis (606) |
| 194 | dito | 1 | 3 | türkis (606) |
| 195 | dito | 1 | 2 | türkis (606) |
| 196 | 2-Sulfo-5-(ß-sulfatoethylsulfonyl)-phenylamino | 0 | 4 | türkis (600) |
| 197 | dito | 0 | 3 | türkis (600) |

| Bsp. | Rest G | Index a | Index b | Farbton |
|---|---|---|---|---|
| 198 | dito | 0 | 2,2 | türkis (600) |
| 199 | dito | 1 | 3 | türkis (600) |
| 200 | dito | 1 | 2 | türkis (600) |

Beispiel 201

Man stellt gemäß den Angaben des Beispieles 103 die alkalische wäßrige Lösung des Kupferphthalocyanin-trisulfonamids her, gibt diese sodann in eine Suspension von 19 Teilen Cyanurchlorid in 200 Teilen Wasser und führt die Umsetzung bei einer Temperatur zwischen 0 und 3°C und unter Einhaltung eine pH-Wertes von 10 mittels wäßriger Natronlauge durch. Nach Beendigung der Reaktion gibt man zu dem Reaktionsansatz 13 Teile 2-Sulfo-ethylamin und führt die zweite Kondensationsreaktion bei einem pH-Wert zwischen 5 und 6 und einer Temperatur zwischen 10 und 30°C durch. Die dritte Kondensationsreaktion erfolgt sodann mit 21 Teilen 4-($\beta$-Sulfatoethylsulfonyl)-anilin bei einem pH-Wert von 3 bis 4 und einer Temperatur zwischen 75 und 80°C.

Der gebildete erfindungsgemäße Kupferphthalocyaninfarbstoff besitzt, in Form der freien Säure geschrieben, die Formel

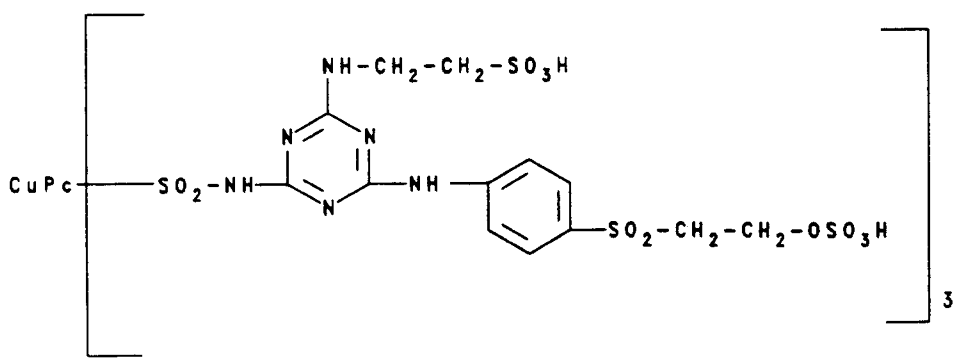

($\lambda_{max}$ = 604 nm).

Er kann durch Eindampfen der Syntheselösung unter reduziertem Druck oder durch Sprühtrocknung als Alkalimetallsalz (Natriumsalz) isoliert werden. Er besitzt faserreaktive Eigenschaften und eignet sich sehr gut als Farbstoff nach den in der Technik üblichen Färbeweisen zum Färben der in der Beschreibung genannten Materialien, insbesondere Cellulosefasermaterialien; man erhält mit ihm farbstarke, türkisfarbene Färbungen und Drucke mit guten Echtheitseigenschaften, von denen insbesondere die Licht-, Naßlicht- und Chlorechtheiten hervorgehoben werden können.

Beispiel 202

Man gibt zu einer Suspension von 19 Teilen Cyanurchlorid in 200 Teilen Wasser 13 Teile 2-Sulfo-ethylamin und führt die Umsetzung bei einer Temperatur zwischen 0 und 3°C unter Einhaltung eines pH-Bereiches von 5 bis 6 mittels Natriumcarbonat durch. In die erhaltene Reaktionslösung gibt man die gemäß Beispiel 105 hergestellte alkalische wäßrige Lösung des Kupferphthalocyaninsulfonamids und führt die Umsetzung mit dem Dichlor-(sulfoethylamino)-s-triazin bei einer Temperatur von 10 bis 30°C und

einem pH-Wert von 10 bis 11 durch. Die dritte Kondensationsreaktion erfolgt anschließend mit 21 Teilen 4-(β-Sulfatoethylsulfonyl)-anilin bei einem pH-Wert von 3 bis 4 und einer Temperatur von 75 bis 80°C.

Der erhaltene Kupferphthalocyaninfarbstoff, der, in Form der freien Säure geschrieben, der Formel

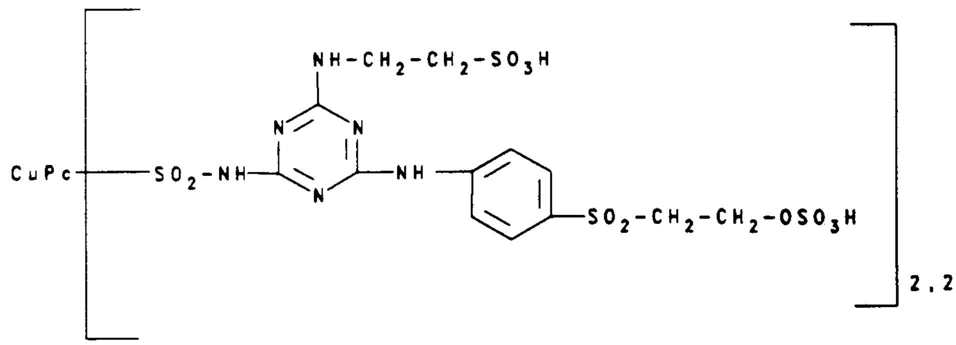

($\lambda_{max}$ = 603 nm)

entspricht, kann durch Eindampfen der Syntheselösung unter reduziertem Druck oder durch Sprühtrocknung als Alkalimetallsalz (Natriumsalz) isoliert werden. Er besitzt die gleichen guten färberischen Eigenschaften wie der Farbstoff des Beispieles 201 und liefert farbstarke, echte türkisfarbene Färbungen mit guten Echtheitseigenschaften.

Beispiel 203

Zu einer Suspension von 14 Teilen Cyanurfluorid in 100 Teilen Wasser gibt man die gemäß den Angaben des Beispieles 103 hergestellte wäßrige alkalische Lösung des Kupferphthalocyanin-trisulfonamids und führt die Umsetzung bei einem pH-Wert zwischen 9 und 10 und einer Temperatur von etwa 0°C durch. Zu der erhaltenen Lösung der Kupferphthalocyanin-difluortriazin-sulfonamid-Verbindung gibt man 21 Teile 4-(β-Sulfatoethylsulfonyl)-anilin; die zweite Kondensationsreaktion wird bei einem pH-Wert zwischen 4 und 5 und einer Temperatur zwischen 10 und 30°C durchgeführt.

Man erhält den erfindungsgemäßen Phthalocyaninfarbstoff, der, in Form der freien Säure geschrieben, der Formel

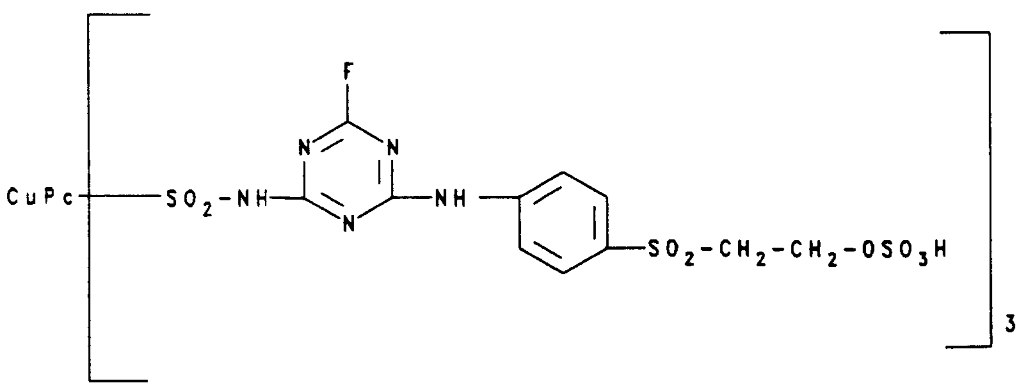

($\lambda_{max}$ = 604 nm)

entspricht, als Alkalimetallsalz (Natriumsalz) durch Sprühtrocknung der Syntheselösung. Der erfindungsgemäße Farbstoff besitzt sehr gute Farbstoffeigenschaften und liefert insbesondere auf Cellulosefasermaterialien farbstarke, türkisfarbene Färbungen mit guten Echtheitseigenschaften, die denen der Färbungen des

Farbstoffes von Beispiel 3 entsprechen.

Beispiele 204 bis 225

In den nachfolgenden Tabellenbeispielen sind weitere erfindungsgemäße Kupferphthalocyaninfarbstoffe entsprechend der allgemeien Formel (C)

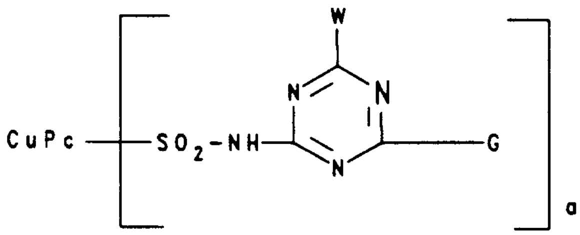

(C)

mit Hilfe von deren Formelkomponenten beschrieben. Sie lassen sich in erfindungsgemäßer Weise, beispielsweise nach einem der Beispiele 201 und 202 bzw. 203, mittels ihrer aus dem jeweiligen Tabellenbeispiel in Verbindung mit der Formel (C) ersichtlichen Komponenten Formel (8)) herstellen. Sie besitzen sehr gute faserreaktive Farbstoffeigenschaften und liefern auf den in der Beschreibung genannten Materialien, insbesondere Cellulosefasermaterialien, wie Baumwolle, nach den bekannten Färbe- und Druckverfahren farbstarke, echte Färbungen und Drucke in dem in dem jeweiligen Tabellenbeispiel für Färbungen auf Baumwolle angegebenen Farbton.

Kupferphthalocyaninfarbstoff der Formel (C)

| Bsp. | Rest G | Rest W | Index a | Farbton |
|---|---|---|---|---|
| 204 | 4-(ß-Sulfatoethyl-sulfonyl)-phenylamino | ß-Sulfo-ethylamino | 4 | türkis (603) |
| 205 | 3-(ß-Sulfaatoethyl-sulfonyl)-phenylamino | dito | 4 | türkis (603) |
| 206 | dito | dito | 3 | türkis (603) |
| 207 | dito | dito | 2,2 | türkis (603) |
| 208 | 3-(ß-Sulfatoethyl-sulfonyl)-propylamino | dito | 4 | türkis (605) |

| Bsp. | Rest G | Rest W | Index a | Farbton |
|---|---|---|---|---|
| 209 | dito | dito | 3 | türkis (605) |
| 210 | dito | dito | 2,2 | türkis (605) |
| 211 | 3-(ß-Chlorethyl-sulfonyl)-propylamino | dito | 4 | türkis (605) |
| 212 | dito | dito | 3 | türkis (605) |
| 213 | dito | dito | 2,2 | türkis (605) |
| 214 | 2-[2'-(ß-Sulfatoethyl-sulfonyl)-ethoxy]-ethylamino | dito | 3 | türkis (604) |
| 215 | dito | dito | 2,2 | türkis (604) |
| 216 | 2-[2'-(ß-Chlorethyl-sulfonyl)-ethoxy]-ethylamino | dito | 3 | türkis (604) |
| 217 | dito | dito | 2,2 | türkis (604) |
| 218 | dito | Methoxy | 3 | türkis (605) |
| 219 | 4-(ß-Sulfatoethyl-sulfonyl)-phenylamino | Methoxy | 3 | türkis (604) |
| 220 | 3-(ß-Sulfatoethyl-sulfonyl)-phenylamino | Methoxy | 3 | türkis (604) |
| 221 | 3-(ß-Sulfatoethyl-sulfonyl)-propylamino | Methoxy | 3 | türkis (606) |
| 222 | 3-(ß-Chlorethyl-sulfonyl)-propylamino | Methoxy | 3 | türkis (606) |
| 223 | 3-(ß-Sulfatoethyl-sulfonyl)-phenylamino | Fluor | 3 | türkis (604) |

| Bsp. | Rest G | Rest W | Index a | Farbton |
|---|---|---|---|---|
| 224 | 3-(ß-Sulfatoethyl-sulfonyl)-propylamino | Fluor | 3 | türkis (606) |
| 225 | 3-(ß-Chlorethyl-sulfonyl)-propylamino | Fluor | 3 | türkis (606) |

Beispiel 226

Zur Herstellung eines erfindungsgemäßen Nickelphthalocyaninfarbstoffes verfährt man gemäß der Verfahrensweise des Beispieles 3, verwendet jedoch anstelle der Kupferphthalocyanin-trisulfonsäurechlorid-Ausgangsverbindung die gleiche Menge an Nickelphthalocyanin-trisulfonsäurechlorid.
Man erhält den erfindungsgemäßen Nickelphthalocyaninfarbstoff als Alkalimetallsalz (Natriumsalz). Er besitzt, in Form der freien Säure geschrieben, die Formel

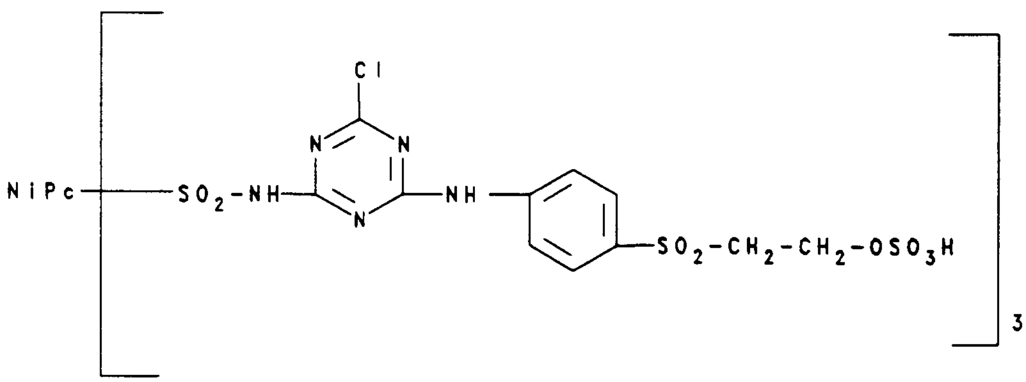

$(\lambda_{max} = 588\ nm)$

und zeigt sehr gute faserreaktive Farbstoffeigenschaften. Nach den in der Technik für faserreaktive Farbstoffe üblichen Färbe- und Druckverfahren liefert er auf den in der Beschreibung genannten Materialien, insbesondere auf Baumwolle, farbstarke, türkisfarbene Färbungen und Drucke mit guten Echtheitseigenschaften, von denen insbesondere die Licht-, Naßlicht- und Chlorechtheiten hervorgehoben werden können.

Beispiel 227

Zur Herstellung eines erfindungsgemäßen Nickelphthalocyaninfarbstoffes verfährt man gemäß der Verfahrensweise des Beispieles 226, verwendet jedoch in der letzten Reaktionsstufe anstelle des 4-(β-Sulfatoethylsulfonyl)-anilins die gleiche Menge an 3-(β-Sulfatoethylsulfonyl)-anilin. Der erfindungsgemäße Farbstoff besitzt im sichtbaren Bereich ein Absorptionsmaximum bei 588 nm und zeigt die gleichen guten färberischen Eigenschaften wie der erfindungsgemäße Farbstoff des Beispieles 226.

## Patentansprüche

1. Wasserlöslicher Phthalocyaninfarbstoff entsprechend der allgemeinen Formel (1)

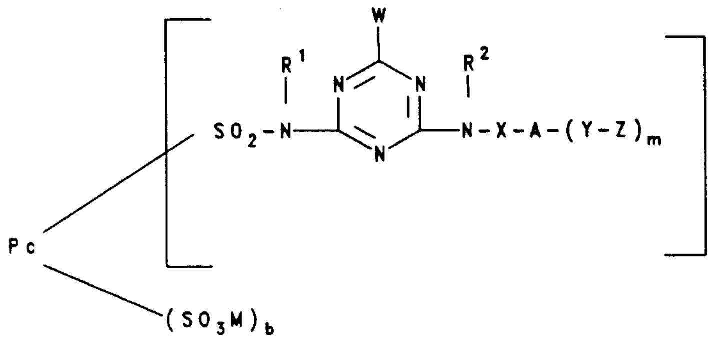

(1)

in welcher bedeuten:

Pc ist der Rest des metallfreien oder eines metallhaltigen Phthalocyanins, wobei der Phthalocyaninrest noch in den 3- und/oder 4-Stellungen der carbocyclischen aromatischen Ringe substituiert sein kann und die Sulfonamid- und Sulfogruppen in den 3- und/oder 4-Stellungen der carbocyclischen aromatischen Ringe des Phthalocyanins gebunden sind;

$R^1$ ist Wasserstoff oder Alkyl von 1 bis 4 C-Atomen, bevorzugt Wasserstoff;

$R^2$ ist Wasserstoff oder Alkyl von 1 bis 4 C-Atomen, bevorzugt Wasserstoff;

A ist ein aromatischer carbocyclischer oder aromatischer heterocyclischer Rest, bevorzugt ein Phenylen- oder Naphthylenrest, die beide durch 1 bis 3 Substituenten aus der Gruppe niederes Alkyl, niederes Alkoxy, Halogen, Carboxy, Nitro und Sulfo substituiert sein können, oder ist ein Alkylenrest von 1 bis 8 C-Atomen oder ein Alkylenrest von 2 bis 8 C-Atomen, der durch 1 oder 2 Heterogruppen unterbrochen ist;

X ist eine direkte Bindung oder ein zweiwertiges organisches Bindeglied, wie ein Alkylenrest von 1 bis 6 C-Atomen oder eine Alkylenaminogruppe der Formel -alkylen-N(R)-, in welcher alkylen einen Alkylenrest von 1 bis 6 C-Atomen bedeutet und R für Wasserstoff oder Alkyl von 1 bis 4 C-Atomen steht, oder eine Gruppe der Formel (4a) bis (4j)

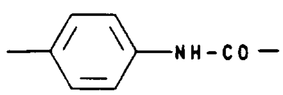

(4a)

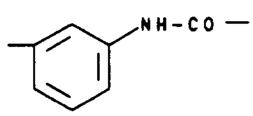

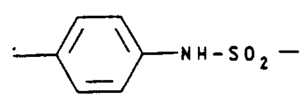

(4c)

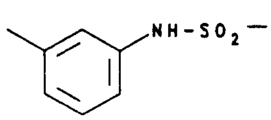

(4d)

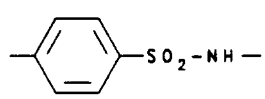

(4e)

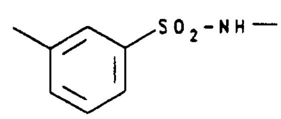

(4f)

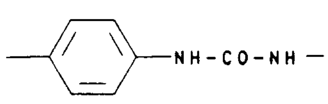

(4g)

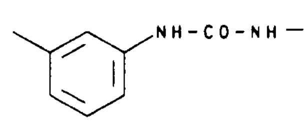

(4h)

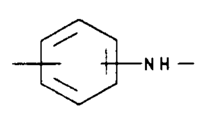

(4j)

;

Y ist eine direkte Bindung oder eine Gruppe der Formel – CO – NH – alkylen – mit alkylen der obigen Bedeutung oder ist Alkylen von 1 bis 6 C – Atomen oder ist eine Gruppe der Formel

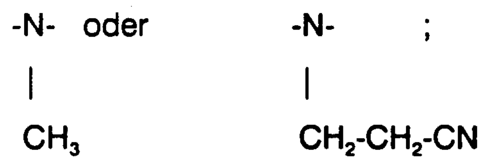

Z ist Vinylsulfonyl oder ist Ethylsulfonyl, das in β – Stellung einen alkalisch eliminierbaren Substituenten enthält, oder ist β – Hydroxyethylsulfonyl;

m ist die Zahl 1 oder 2, bevorzugt 1;

W ist Halogen, Sulfo, Phenylsulfonyl, Alkylsulfonyl von 1 bis 4 C – Atomen, Alkoxy von 1 bis 4 C – Atomen oder gegebenenfalls substituiertes Aryloxy, oder

W ist eine Aminogruppe der allgemeinen Formel (2)

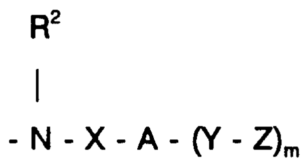 (2)

in welcher $R^2$, X, A, Y, Z und m eine der obengenannten Bedeutungen haben, oder ist eine Aminogruppe der allgemeinen Formel (3)

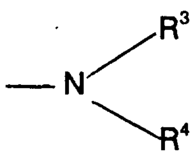 (3)

in welcher

$R^3$ Wasserstoff, Alkyl von 1 bis 4 C – Atomen, Alkyl von 1 bis 4 C – Atomen, das durch Hydroxy, Sulfato, Sulfo, Carboxy oder Phosphato substituiert ist, oder Cycloalkyl von 5 bis 8 C – Atomen ist und

$R^4$ Wasserstoff, Alkyl von 1 bis 4 C – Atomen, Alkyl von 1 bis 4 C – Atomen, das durch Hydroxy, Sulfo, Carboxy, Sulfato oder Phosphato substituiert ist, Phenyl oder Phenyl ist, das durch 1, 2 oder 3 Substituenten aus der Gruppe Alkyl von 1 bis 4 C – Atomen, Alkoxy von 1 bis 4 C – Atomen, Halogen, Carboxy, Nitro und Sulfo substituiert ist, oder Cyano ist, oder

$R^3$ und $R^4$ bilden gemeinsam mit dem Stickstoffatom den Rest eines 4 – bis 8 – gliedrigen heterocyclischen Rings mit einem Alkylenrest von 3 bis 8 C – Atomen oder einem weiteren Heteroatom und zwei Alkylenresten von 1 bis 4 C – Atomen;

a ist eine ganze Zahl von 1 bis 4;

b ist eine ganze Zahl von Null bis 3;

die Summe von (a + b) ist 1 bis 4;

M ist ein Wasserstoffatom oder ein Alkalimetall oder ein anderes salzbildendes Metall.

**2.** Phthalocyaninfarbstoff nach Anspruch 1, dadurch gekennzeichnet, daß W Chlor oder Fluor ist.

**3.** Phthalocyaninfarbstoff nach Anspruch 1 oder 2, dadurch gekennzeichnet, daß X und Y jedes eine direkte Bindung bedeuten und m für die Zahl 1 steht.

**4.** Phthalocyaninfarbstoff nach Anspruch 1, dadurch gekennzeichnet, daß W Chlor oder Fluor bedeutet, X und Y jedes eine direkte Bindung bedeuten, m für die Zahl 1 steht und A einen Phenylenrest bedeutet, der durch 1 bis 3 Substituenten aus der Gruppe Alkyl von 1 bis 4 C-Atomen, Alkoxy von 1 bis 4 C-Atomen, Halogen, Carboxy, Nitro und Sulfo substituiert sein kann.

**5.** Phthalocyaninfarbstoff nach Anspruch 1, dadurch gekennzeichnet, daß W Chlor ist, X und Y beide eine direkte Bindung bedeuten, m für die Zahl 1 steht und A den meta- oder para-Phenylenrest bedeutet.

**6.** Phthalocyaninfarbstoff nach Anspruch 1, dadurch gekennzeichnet, daß W Chlor oder Fluor ist, X und Y beide eine direkte Bindung bedeuten, m für die Zahl 1 steht und A eine Alkylengruppe von 2 bis 6 C-Atomen bedeutet, die durch eine Heterogruppe unterbrochen sein kann.

**7.** Phthalocyaninfarbstoff nach Anspruch 1, dadurch gekennzeichnet, daß W Chlor ist, X und Y beide eine direkte Bindung bedeuten, m für die Zahl 1 steht und A die 1,3-Propylen-Gruppe ist.

**8.** Phthalocyaninfarbstoff nach Anspruch 1, dadurch gekennzeichnet, daß W eine Gruppe der Formel $-NR^3R^4$ mit $R^3$ und $R^4$ der in Anspruch 1 angegebenen Bedeutung ist.

**9.** Phthalocyaninfarbstoff nach Anspruch 8, dadurch gekennzeichnet, daß X und Y beide eine direkte Bindung bedeuten und m für die Zahl 1 steht.

**10.** Phthalocyaninfarbstoff nach Anspruch 9, dadurch gekennzeichnet, daß A ein Phenylenrest, der durch 1 bis 3 Substituenten aus der Gruppe Alkyl von 1 bis 4 C-Atomen, Alkoxy von 1 bis 4 C-Atomen, Halogen, Carboxy, Nitro und Sulfo subtituiert sein kann.

**11.** Phthalocyaninfarbstoff nach Anspruch 8, dadurch gekennzeichnet, daß X und Y beide für eine direkte Bindung stehen, m die Zahl 1 ist und A einen Alkylenrest von 2 bis 6 C-Atomen bedeutet, der durch eine Heterogruppe unterbrochen sein kann.

**12.** Phthalocyaninfarbstoff nach Anspruch 1, dadurch gekennzeichnet, daß W die Cyanamidogruppe bedeutet.

**13.** Phthalocyaninfarbstoff nach Anspruch 12, dadurch gekennzeichnet, daß X und Y beide eine direkte Bindung bedeuten und m die Zahl 1 ist.

**14.** Phthalocyaninfarbstoff nach Anspruch 13, dadurch gekennzeichnet, daß A den meta- oder para-Phenylenrest bedeutet.

**15.** Phthalocyaninfarbstoff nach Anspruch 13, dadurch gekennzeichnet, daß A für den n-Propylen-Rest steht.

**16.** Phthalocyaninfarbstoff nach mindestens einem der Ansprüche 1 bis 15, dadurch gekennzeichnet, daß $R^1$ und $R^2$ beide ein Wasserstoffatom bedeuten.

**17.** Phthalocyaninfarbstoff nach mindestens einem der Ansprüche 1 bis 16, dadurch gekennzeichnet, daß Z die $\beta$-Sulfatoethylsulfonyl-Gruppe bedeutet.

**18.** Phthalocyaninfarbstoff nach mindestens einem der Ansprüche 1 bis 17, dadurch gekennzeichnet, daß Pc für den Nickelphthalocyanin- oder bevorzugt für den Kupferphthalocyaninrest steht.

**19.** Verfahren zur Herstellung eines Phthalocyaninfarbstoffes von Anspruch 1, dadurch gekennzeichnet, daß man eine Verbindung der allgemeinen Formel 5

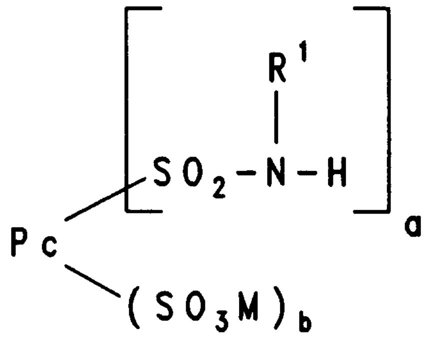

(5)

in welcher die einzelnen Formelreste die für Formel (1) angegebenen Bedeutungen haben, mit einer Halogen-triazin-Verbindung der allgemeinen Formel (6)

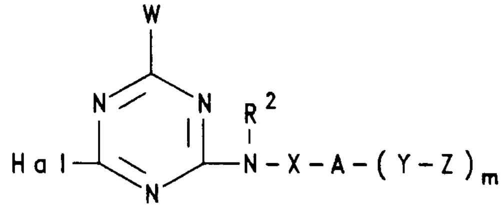

(6)

in welcher Hal für Halogen steht und W, $R^2$, X, A, Y, Z und m eine der in Anspruch 1 genannten Bedeutungen haben, umsetzt,
oder daß man eine Verbindung der allgemeinen Formel (7)

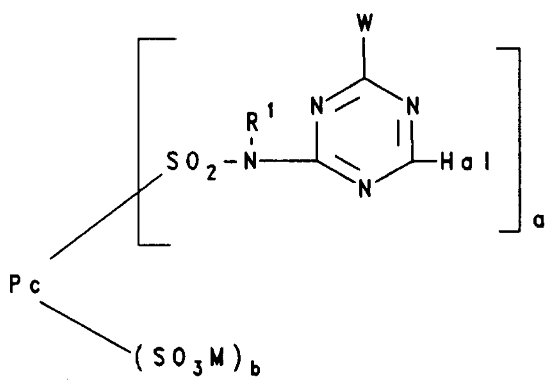

(7)

in welcher die Formelreste die für Formel (1) angegebenen Bedeutungen haben, mit einer Aminoverbindung der allgemeinen Formel (8)

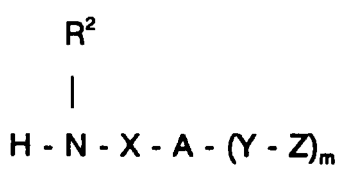

(8)

in welcher $R^2$, X, A, Y, Z und m eine der in Anspruch 1 genannten Bedeutungen haben, umsetzt, oder daß man zur Herstellung eines Phthalocyaninfarbstoffes der Formel (1), in welcher W eine Aminogruppe der Formel (2) oder ein Halogenatom bedeutet, eine Verbindung der allgemeinen Formel (9)

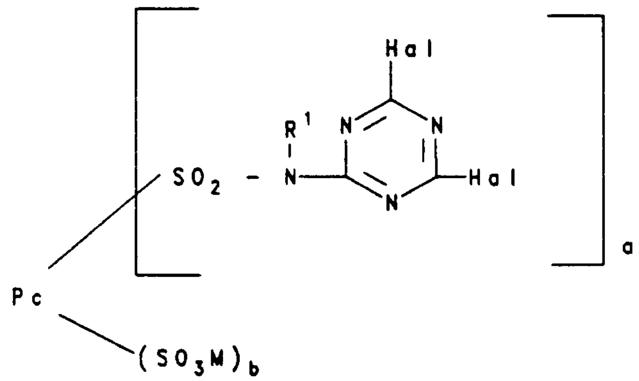

(9)

in welcher die einzelnen Formelreste die oben angegebenen Bedeutungen haben, mit einem Amin der allgemeinen Formel (8) in ein- oder zweifach äquivalenter Menge umsetzt, wobei man im Falle, daß Z für die β-Hydroxyethylsulfonyl-Gruppe steht und W kein Halogenatom bedeutet, die erhaltene β-hydroxyethylsulfonylgruppenhaltige Phthalocyaninverbindung in einen Phthalocyaninfarbstoff der Formel (1) mit einem Rest Z einer anderen Bedeutung in an und für sich bekannter Verfahrensweise überführt.

**20.** Verwendung eines Phthalocyaninfarbstoffe von mindestens einem der Ansprüche 1 bis 18 oder eines nach Anspruch 19 hergestellten Phthalocyaninfarbstoffes zum Färben und Bedrucken von hydroxy- und/oder carbonamidgruppenhaltigem Material, insbesondere Fasermaterial.

**21.** Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß der Farbstoff ein Phthalocyaninfarbstoff von mindestens einem der Ansprüche 1 bis 18 oder einen nach Anspruch 19 hergestellten Phthalocyaninfarbstoff ist.

Europäisches Patentamt

# EUROPÄISCHER RECHERCHENBERICHT

Nummer der Anmeldung

EP 92 11 8878

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | GB-A-836 647 (IMPERIAL CHEMICAL INDUSTRIES LTD.)<br>* Seite 1, Zeile 44 - Zeile 58; Ansprüche *<br>* Seite 3, Zeile 102 - Zeile 122 *<br>--- | 1-21 | C09B62/517<br>C09B62/10 |
| Y | FR-A-2 569 213 (NIPPON KAYAKU KABUSHIKI KAISHA)<br>* Beispiel 62 *<br>--- | 1-21 | |
| Y,D | EP-A-0 073 267 (SUMITOMO CHEMICAL COMPANY, LTD.)<br>* Ansprüche; Beispiele *<br>--- | 1-21 | |
| Y | WO-A-9 013 604 (HOECHST AG.)<br>* Ansprüche 1-4,11-13; Beispiele 177-182 *<br>----- | 1,3,8-21 | |
| | | | **RECHERCHIERTE SACHGEBIETE (Int. Cl.5 )** |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 16 FEBRUAR 1993 | GINOUX C.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument